(19) Europäisches Patentamt
European Patent Office
Office européen des brevets

(11) EP 4 393 700 A1

(12) EUROPEAN PATENT APPLICATION
published in accordance with Art. 153(4) EPC

(43) Date of publication:
**03.07.2024 Bulletin 2024/27**

(21) Application number: **22875784.5**

(22) Date of filing: **12.09.2022**

(51) International Patent Classification (IPC):
***B32B 27/00*** *(2006.01)* ***B32B 27/30*** *(2006.01)*
***C09J 133/00*** *(2006.01)* ***C09J 133/04*** *(2006.01)*
***C09J 7/26*** *(2018.01)* ***C09J 7/38*** *(2018.01)*
***B32B 3/24*** *(2006.01)* ***G02B 1/10*** *(2015.01)*
***G02B 1/111*** *(2015.01)*

(52) Cooperative Patent Classification (CPC):
**B32B 3/266; B32B 27/00; B32B 27/30; C09J 7/26; C09J 7/38; C09J 133/00; C09J 133/04; G02B 1/10; G02B 1/111**

(86) International application number:
**PCT/JP2022/034005**

(87) International publication number:
**WO 2023/053912 (06.04.2023 Gazette 2023/14)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **30.09.2021 JP 2021162189**
**30.09.2021 JP 2021162190**
**28.03.2022 JP 2022052542**

(71) Applicant: **NITTO DENKO CORPORATION**
**Ibaraki-shi**
**Osaka 567-8680 (JP)**

(72) Inventors:
- **SUGINO Akiko**
**Ibaraki-shi, Osaka 567-8680 (JP)**
- **TAKAHASHI Tomokazu**
**Ibaraki-shi, Osaka 567-8680 (JP)**
- **HATTORI Daisuke**
**Ibaraki-shi, Osaka 567-8680 (JP)**
- **HAMADA Chie**
**Ibaraki-shi, Osaka 567-8680 (JP)**
- **YOSHIMI Toshiya**
**Ibaraki-shi, Osaka 567-8680 (JP)**

(74) Representative: **Hoffmann Eitle**
**Patent- und Rechtsanwälte PartmbB**
**Arabellastraße 30**
**81925 München (DE)**

# (54) LAMINATE, OPTICAL MEMBER, AND OPTICAL DEVICE

(57) The present invention provides a laminate of a void-containing layer and a pressure-sensitive adhesive/adhesive layer in which a pressure-sensitive adhesive force or an adhesive force is achieved as well as a pressure-sensitive adhesive or an adhesive is less liable to permeate into voids. A laminate (10 or 10a) of the present invention includes: a void-containing layer (11); and a pressure-sensitive adhesive/adhesive layer (12), wherein the pressure-sensitive adhesive/adhesive layer (12) is directly laminated on one surface or both surfaces of the void-containing layer (11), the pressure-sensitive adhesive/adhesive layer (12) contains a (meth)acrylic polymer, and nanoindentation hardness of the pressure-sensitive adhesive/adhesive layer (12) is 0.1 MPa or more and 1.0 MPa or less.

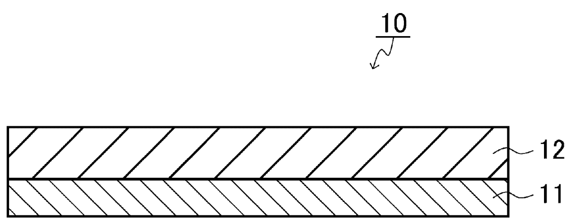

FIG. 1A

EP 4 393 700 A1

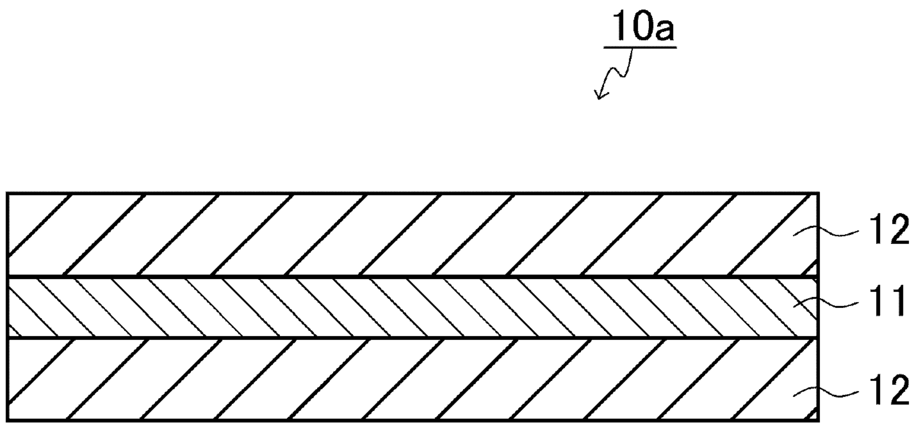


FIG. 1B

## Description

TECHNICAL FIELD

The present invention relates to a laminate, an optical member, and an optical apparatus.

BACKGROUND ART

In an optical apparatus, for example, an air layer having a low refractive index is used as a total reflection layer. Specifically, for example, optical film members (e.g., a light guide plate and a reflector) in a liquid crystal device are laminated with an air layer interposed therebetween. However, when the respective members are separated from each other by an air layer, particularly in a case where the members are large in size, problems such as distortion of the members may arise. In addition, due to trends toward thinner devices, it is desired to integrate the respective members. For this reason, the respective members are integrated by a pressure-sensitive adhesive/adhesive without an air layer interposed therebetween (Patent Literature 1). However, if there is no air layer serving as a total reflection layer, optical characteristics may become poor, which causes light leakage.

Therefore, it has been proposed to use a low refractive index layer instead of an air layer. For example, Patent Literature 2 describes a structure in which a light guide plate and a reflector are laminated with a layer having a lower refractive index than that of the light guide plate interposed therebetween. As the low refractive index layer, for example, a void-containing layer having voids is used in order to make the refractive index low as close as possible to air.

Furthermore, an integrated configuration with a pressure-sensitive adhesive/adhesive layer in order to introduce a void-containing layer into a device has also been proposed (Patent Literature 3).

Citation List

Patent Literature

Patent Literature 1: JP 2012-156082 A
Patent Literature 2: JPH10(1998)-062626 A
Patent Literature 3: JP 2014-046518 A

SUMMARY OF INVENTION

Technical Problem

For example, the void-containing layer is laminated on another layer with a pressure-sensitive adhesive/adhesive layer interposed therebetween to use. However, when laminating the void-containing layer and the pressure-sensitive adhesive/adhesive layer, the pressure-sensitive adhesive or adhesive constituting the pressure-sensitive adhesive/adhesive layer may permeate into voids of the void-containing layer to fill the voids, which lowers the void fraction of the void-containing layer and increases the refractive index. The higher the void fraction of the void-containing layer, the more liable the pressure-sensitive adhesive or adhesive will permeate. In a high-temperature environment, the pressure-sensitive adhesive or adhesive is liable to permeate into the voids due to the molecular motion (decrease in elastic modulus) of the pressure-sensitive adhesive or adhesive. In a high humidity environment, the pressure-sensitive adhesive or adhesive is liable to permeate into the voids due to water absorption of the pressure-sensitive adhesive or adhesive.

In order to suppress or prevent the permeation of the pressure-sensitive adhesive or adhesive into the voids, the pressure-sensitive adhesive or the adhesive having an elastic modulus as high (hard) as possible may be used. However, if the elastic modulus of the pressure-sensitive adhesive or adhesive is high (hard), the pressure-sensitive adhesive force or the adhesive force may be lowered. Conversely, if the elastic modulus of the pressure-sensitive adhesive or adhesive is low (soft), a high pressure-sensitive adhesive force or an adhesive force is likely obtained, whereas the pressure-sensitive adhesive or adhesive may be liable to permeate into the voids.

With the foregoing in mind, it is an object of the present invention to provide a laminate in which a pressure-sensitive adhesive force or an adhesive force is achieved as well as a pressure-sensitive adhesive or an adhesive is less liable to permeate into voids, and an optical member and an optical apparatus including the laminate.

## Solution to Problem

In order to achieve the above object, the present invention provides a laminate including: a void-containing layer; and a pressure-sensitive adhesive/adhesive layer, wherein the pressure-sensitive adhesive/adhesive layer is directly laminated on one surface or both surfaces of the void-containing layer, the pressure-sensitive adhesive/adhesive layer contains a (meth)acrylic polymer, and nanoindentation hardness measured by pushing an indenter of a nano indenter into the pressure-sensitive adhesive/adhesive layer for 2000 nm is 0.1 MPa or more and 1.0 MPa or less.
The present invention also provides an optical member including: the laminate according to the present invention.
The present invention also provides an optical apparatus including: the optical member according to the present invention.

## Advantageous Effects of Invention

The present invention can provide a laminate in which a pressure-sensitive adhesive force or an adhesive force is achieved as well as a pressure-sensitive adhesive or an adhesive is less liable to permeate into voids, and an optical member and an optical apparatus including the laminate.

## BRIEF DESCRIPTION OF DRAWINGS

[FIGs. 1A and 1B] FIGs. 1A and 1B are cross-sectional views showing an example of the configuration of a laminate of the present invention.
[FIGs. 2A and 2B] FIGs. 2A and 2B are cross-sectional views showing another example of the configuration of the laminate of the present invention.
[FIGs. 3A and 3B] FIGs. 3A and 3B are cross-sectional views showing still another example of the configuration of the laminate of the present invention.

## DESCRIPTION OF EMBODIMENTS

The present invention will be described more specifically below with reference to illustrative examples. It is to be noted, however, that the present invention is by no means limited by the following descriptions.
In the laminate of the present invention, for example, the (meth)acrylic polymer may contain 1 to 30 wt% of a nitrogen-containing monomer as a monomer unit and may have a polydispersity (weight average molecular weight (Mw)/number average molecular weight (Mn)) of 3.0 or less.
In the laminate of the present invention, for example, the pressure-sensitive adhesive/adhesive layer may be formed of a pressure-sensitive adhesive/adhesive containing the (meth)acrylic polymer and a crosslinking agent, and the pressure-sensitive adhesive/adhesive may have a gel fraction of more than 85%.
In the laminate of the present invention, for example, the pressure-sensitive adhesive/adhesive layer may be formed of a pressure-sensitive adhesive/adhesive containing the (meth)acrylic polymer, the pressure-sensitive adhesive/adhesive may have a gel fraction of more than 85%, and the (meth)acrylic polymer may be substantially free of a (meth)acrylic polymer having a polystyrene-equivalent molecular weight of 100,000 or less.
In the laminate of the present invention, for example, a content of the (meth)acrylic polymer having a polystyrene-equivalent molecular weight of 100,000 or less in the (meth)acrylic polymer may be 10 wt% or less, 5 wt% or less, 1 wt% or less, 0.5 wt% or less, or less than 0.1 wt%. The lower limit of the content of the (meth)acrylic polymer having a polystyrene-equivalent molecular weight of 100,000 or less in the (meth)acrylic polymer is not particularly limited, and is, for example, 0 wt % (that is, free of the (meth)acrylic polymer having a polystyrene-equivalent molecular weight of 100,000 or less) or more than 0 wt %.
In the laminate of the present invention, for example, the (meth)acrylic polymer may be substantially free of a (meth)acrylic polymer having a polystyrene-equivalent molecular weight of 30 million or more.
In the laminate of the present invention, for example, a content of the (meth)acrylic polymer having a polystyrene-equivalent molecular weight of 30 million or more in the (meth)acrylic polymer may be 10 wt% or less, 5 wt% or less, 1 wt% or less, 0.5 wt% or less, or less than 0.1 wt%. The lower limit of the content of the (meth)acrylic polymer having a polystyrene-equivalent molecular weight of 30 million or more in the (meth)acrylic polymer is not particularly limited, and is, for example, 0 wt % (that is, free of the (meth)acrylic polymer having a polystyrene-equivalent molecular weight of 30 million or more) or more than 0 wt %.
The (meth)acrylic polymer may contain 1 to 30 wt% of a nitrogen-containing monomer as a monomer unit.
In the laminate of the present invention, for example, the weight average molecular weight (Mw) of the

(meth)acrylic polymer may be 1.5 million to 4 million.

In the laminate of the present invention, for example, the nitrogen-containing monomer may be a heterocycle-containing acrylic monomer.

The laminate of the present invention, for example, may include an intermediate layer interposed between the void-containing layer and the pressure-sensitive adhesive/adhesive layer, wherein the intermediate layer may be a layer formed by uniting the void-containing layer and the pressure-sensitive adhesive/adhesive layer.

In the laminate of the present invention, for example, the intermediate layer may have a thickness of 10 nm to 100 nm.

In the laminate of the present invention, for example, the intermediate layer has a storage elastic modulus of 1.0 MPa or more at 23 °C.

In the laminate of the present invention, for example, a void retention rate of the void-containing layer may exceed 50 vol% after a heat durability test of maintaining a temperature at 95°C for 1000 hours.

In the present invention, a "pressure-sensitive adhesive/adhesive layer" is a layer formed of at least either of a pressure-sensitive adhesive or an adhesive. In the present invention, unless otherwise specified, the " pressure-sensitive adhesive/adhesive layer" may be a "pressure-sensitive adhesive layer" formed of a pressure-sensitive adhesive, an "adhesive layer" formed of an adhesive, or a layer including both a pressure-sensitive adhesive and an adhesive. Further, in the present invention, the pressure-sensitive adhesive and the adhesive are collectively referred to as the "pressure-sensitive adhesive/adhesive" in some cases. Generally, an agent having a relatively weak pressure-sensitive adhesive force or an adhesive force (for example, an agent that adheres a substance in a peelable manner) is called the "pressure-sensitive adhesive", and an agent having a relatively strong pressure-sensitive adhesive force or an adhesive force (for example, an agent that adheres a substance in a non-peelable or hardly peelable manner) is called the "adhesive", and the two of them are distinguished in some cases. In the present invention, there is no clear distinction between the "pressure-sensitive adhesive" and the "adhesive". Also, in the present invention, there is no clear distinction between the "pressure-sensitive adhesive force" and the "adhesive force".

Note that, in the present invention, "on" or "on a surface" may indicate a state of directly in contact with or in contact with the surface or a state of indirectly in contact with or in contact with the surface with another layer or the like interposed therebetween.

In the laminate of the present invention, the (meth)acrylic polymer may be, for example, a (meth)acrylic polymer having a weight average molecular weight of 500,000 to 3.5 million obtained by polymerizing, as a monomer component, 3 to 20 wt% of a heterocycle-containing acrylic monomer (heterocycle-containing acrylate), 0.5 to 5 wt% of (meth)acrylic acid, 0.05 to 2 wt% of hydroxyalkyl (meth)acrylate, and 83 to 96.45 wt% of alkyl (meth)acrylate.

In the pressure-sensitive adhesive/adhesive layer of the laminate of the present invention, for example, the nitrogen-containing monomer may be a monomer having one or two reactive double bonds per molecule. The monomer having one or two reactive double bonds per molecule may be, for example, a heterocycle-containing acrylic monomer (heterocycle-containing acrylate).

In the laminate of the present invention, the gel fraction of the pressure-sensitive adhesive/adhesive forming the pressure-sensitive adhesive/adhesive layer may be, for example, 85 wt% or more, 90 wt% or more, 91 wt% or more, or 93 wt% or more, for example, 100 wt% or less, 99 wt% or less, or 98 wt% or less.

In the laminate of the present invention, for example, the void-containing layer may have a refractive index of 1.25 or less.

In the laminate of the present invention, for example, the void-containing layer may have a refractive index of 1.25 or less after a heat durability test of maintaining a temperature at 95°C for 1000 hours.

In the laminate of the present invention, for example, the void-containing layer may have a void fraction of 35 vol% or more.

In the laminate of the present invention, for example, the void-containing layer may be a porous material in which microporous particles are chemically bonded with each other.

In the laminate of the present invention, for example, the pressure-sensitive adhesive/adhesive layer may be formed by a method including: preparing a pressure-sensitive adhesive/adhesive coating solution containing a (meth)acrylic polymer; coating the pressure-sensitive adhesive/adhesive coating solution onto a base; and heat-drying the base coated with the pressure-sensitive adhesive/adhesive coating solution. The laminate of the present invention may be obtained, for example, by forming a pressure-sensitive adhesive/adhesive layer from a pressure-sensitive adhesive/adhesive coating solution having a specific composition as described above and integrating the thus obtained pressure-sensitive adhesive/adhesive layer with a void-containing layer. Thus, for example, it is possible to suppress serious permeation of the pressure-sensitive adhesive/adhesive layer into the void-containing layer even under a particularly long-term heat durability test, for example. The pressure-sensitive adhesive/adhesive coating solution may further contain, for example, a crosslinking agent, or may contain other component(s) as described below.

In the laminate of the present invention, the reason why (mechanism by which) a pressure-sensitive adhesive force or an adhesive force is achieved as well as a pressure-sensitive adhesive or an adhesive is less liable to permeate

into voids is conceivable as follows, for example. For example, by forming a pressure-sensitive adhesive/adhesive layer using a specific pressure-sensitive adhesive, a pressure-sensitive adhesive force or an adhesive force is achieved as well as a pressure-sensitive adhesive or an adhesive is less liable to permeate into voids. More specifically, for example, by forming a pressure-sensitive adhesive/adhesive layer using the specific (meth)acrylic polymer as described above and a crosslinking agent as needed, an intermediate layer is formed by uniting a part of the void-containing layer and a part of the pressure-sensitive adhesive/adhesive layer. By using such a specific (meth)acrylic polymer, the intermediate layer is not excessively expanded even under the heat durability test. In addition, the intermediate layer serves as a stopper, which makes it possible to suppress a reduction in the void fraction caused by filling the voids of the void-containing layer with the pressure-sensitive adhesive. Even if the molecular motion of the pressure-sensitive adhesive is increased when it is heated, if the elastic modulus of the pressure-sensitive adhesive is high, the intermediate layer made of the pressure-sensitive adhesive and a highly void-containing layer is likely to be a strong and dense stopper, which suppresses permeation of the pressure-sensitive adhesive into the highly void-containing layer. However, these mechanisms are merely illustrative and do not limit the invention in any way.

By containing a monomer having one or two reactive double bonds per molecule, for example, the pressure-sensitive adhesive/adhesive coating solution can be crosslinked with a crosslinking agent such as an isocyanate-based crosslinking agent by being heated. It is conceivable that the presence of a monomer having one or two reactive double bonds per molecule and an organic peroxide, which is a hydrogen-abstraction initiator, during the crosslinking reaction results in high-density crosslinking of even a semi-polymeric component having a molecular weight of 10,000 or less in the pressure-sensitive adhesive/adhesive coating solution, thereby further suppressing the permeation of the component from the pressure-sensitive adhesive/adhesive coating solution into the void-containing layer at a high level. That is, it is conceivable that while a semi-polymeric component having a molecular weight of 10,000 or less is liable to permeate into voids of the void-containing layer due to its small molecular size, the permeation into voids of the void-containing layer is suppressed by increasing the molecular size by crosslinking reaction. Furthermore, it is presumed that the presence of a monomer having one or two reactive double bonds per molecule during the crosslinking reaction allows graft reaction with the (meth)acrylic polymer main chain and high-density crosslinking starting from the graft chain, thereby decreasing the amount of the semi-polymeric component that can be a sol component itself. However, these mechanisms are also illustrative and do not limit the invention in any way.

In the pressure-sensitive adhesive/adhesive coating solution for forming the pressure-sensitive adhesive/adhesive layer in the laminate of the present invention, the number of functional groups (the number of reactive double bonds per molecule) in the nitrogen-containing monomer is preferably small in view of efficiently crosslinking the main chains in the graft reaction, and for example, as described above, the number of reactive double bonds per molecule is preferably one or two.

In the production of the (meth)acrylic polymer, even if a monomer having one or two reactive double bonds is mixed, it is difficult to reduce the amount of the semi-polymeric component (which has a small molecular weight and is liable to permeate into voids of a void-containing layer) as described above. However, according to the present invention, by using a pressure-sensitive adhesive/adhesive coating solution obtained by mixing a (meth)acrylic polymer with a monomer having one or two reactive double bonds, and crosslinking the same, for example, the graft reaction as described above occurs, and the amount of the semi-polymeric component can be reduced.

In the present invention, "(meth)acrylic" means at least one of acrylic and methacrylic. For example, "(meth)acrylic acid" means at least one of acrylic acid and methacrylic acid. Further, "(meth)acrylic acid ester" means at least one of an acrylic acid ester and a methacrylic acid ester, and "methyl (meth)acrylate" means at least one of methyl acrylate and methyl methacrylate.

In the present invention, the term "(meth)acrylic polymer" refers to a polymer having a structure obtained by polymerizing a component containing at least one element selected from the group consisting of acrylic acid, methacrylic acid, acrylic acid ester, methacrylic acid ester, a monomer having an acryloyl group, and a monomer having a methacryloyl group, for example. The component may or may not contain at least one substance other than at least one element selected from the group consisting of acrylic acid, methacrylic acid, acrylic acid ester, methacrylic acid ester, a monomer having an acryloyl group, and a monomer having a methacryloyl group.

In the present invention, the "acrylic monomer" refers to a monomer including at least one element selected from the group consisting of acrylic acid, acrylic acid ester, and a monomer having an acryloyl group.

In the present invention, the "isocyanate-based crosslinking agent" refers to, for example, a crosslinking agent having an isocyanate group (isocyanato group) in a molecule. In the present invention, the number of isocyanate groups (isocyanato groups) per molecule of the isocyanate-based crosslinking agent is not particularly limited, and is preferably 2 or more, and, for example, 2 or 3 or 4, and the upper limit thereof is not particularly limited, and is, for example, 10 or less.

In the present invention, the "epoxy-based crosslinking agent" refers to, for example, a crosslinking agent having an epoxy group in a molecule. In the present invention, the number of epoxy groups per molecule of the epoxy-based crosslinking agent is not particularly limited, and is preferably 2 or more, and, for example, 2 or 3 or 4, and the upper limit thereof is not particularly limited, and is, for example, 10 or less.

[1. Laminate, optical member, and optical apparatus]

As described above, the laminate of the present application includes a void-containing layer and a pressure-sensitive adhesive/adhesive layer, wherein the pressure-sensitive adhesive/adhesive layer is directly laminated on one surface or both surfaces of the void-containing layer. In the present application, for example, "the pressure-sensitive adhesive/adhesive layer is 'directly laminated on' the void-containing layer" may mean either the pressure-sensitive adhesive/adhesive layer is in direct contact with the void-containing layer or the pressure-sensitive adhesive/adhesive layer is laminated on the void-containing layer with an intermediate layer interposed therebetween.

FIG. 1A is a cross-sectional view showing an example of a configuration of a laminate of the present application. As shown in FIG. 1A, in a laminate 10, a pressure-sensitive adhesive/adhesive layer 12 is directly laminated on one surface of a void-containing layer 11. Further, the cross-sectional view of FIG. 1B shows another example of the configuration of the laminate of the present application. As shown in FIG. 1B, in a laminate 10a, the pressure-sensitive adhesive/adhesive layers 12 are directly laminated on both surfaces of the void-containing layer 11.

Further, as described above, the laminate of the present application may include an intermediate layer interposed between the void-containing layer and the pressure-sensitive adhesive/adhesive layer, wherein the intermediate layer may be a layer formed by uniting the void-containing layer and the pressure-sensitive adhesive/adhesive layer. FIGs. 2A and 2B show an example of such a laminate of the present application. In a laminate 10b of FIG. 2A, as can be seen, the pressure-sensitive adhesive/adhesive layer 12 is directly laminated on one surface of the void-containing layer 11. This laminate 10b is the same as the laminate 10 of FIG. 1A except that an intermediate layer 13 is interposed between the void-containing layer 11 and the pressure-sensitive adhesive/adhesive layer 12. The intermediate layer 13 is a layer formed by uniting the void-containing layer 11 and the pressure-sensitive adhesive/adhesive layer 12. In a laminate 10c of FIG. 2B, as can be seen, the pressure-sensitive adhesive/adhesive layers 12 are directly laminated on both surfaces of the void-containing layers 11. This laminate 10c is the same as the laminate 10a of FIG. 1B, except that each of the intermediate layers 13 is interposed between the void-containing layer 11 and each of the pressure-sensitive adhesive/adhesive layers 12. As in FIG. 2A, the intermediate layer 13 is a layer formed by uniting the void-containing layer 11 and the pressure-sensitive adhesive/adhesive layer 12.

In the pressure-sensitive adhesive/adhesive layer of the laminate of the present application, the nanoindentation hardness measured by pushing an indenter of a nano indenter into the pressure-sensitive adhesive layer for 2000 nm (hereinafter, sometimes referred to as "nanoindentation hardness") is 0.1 MPa or more and 1.0 MPa or less, as described above. The upper limit thereof is not particularly limited, and is preferably, for example, 0.6 MPa or less, more preferably 0.55 MPa or less, and still more preferably 0.25 MPa or less. The lower limit thereof is not particularly limited, and is preferably, for example, 0.11 MPa or more, more preferably 0.13 MPa or more, and still more preferably 0.18 MPa or more.

In the laminate of the present application, for example, as described above, the intermediate layer may have a storage elastic modulus of 1.0 MPa or more at 23°C. The storage elastic modulus of the intermediate layer at 23°C may be, for example, 1.1 MPa or more, 1.3 MPa or more, or 1.5 MPa or more, and may be, for example, 10.0 MPa or less, 7.0 MPa or less, or 5.0 MPa or less. From the viewpoint of preventing the pressure-sensitive adhesive/adhesive from permeating into the void-containing layer, it is preferable that the storage elastic modulus of the intermediate layer at 23°C be not too low, and from the viewpoint of adhesion between the void-containing layer and the pressure-sensitive adhesive/adhesive layer, it is preferable that the storage elastic modulus of the intermediate layer at 23°C be not too high.

In addition, the laminate of the present application may or may not include a component(s) other than the void-containing layer, the pressure-sensitive adhesive/adhesive layer, and the intermediate layer. The other component(s) is not particularly limited, and may be, for example, a base or the like. The base is not particularly limited, and may be, for example, a film (e.g., a resin film), a glass plate, or the like, as described below. FIGs. 3A and 3B show an example of such a laminate of the present application. A laminate 10d of FIG. 3A is the same as the laminate 10b of FIG. 2A, except that bases 14 are provided on the surface of the void-containing layer 11 on the side facing away from the pressure-sensitive adhesive/adhesive layer 12 and on the surface of the pressure-sensitive adhesive/adhesive layer 12 on the side facing away from the void-containing layer 11, respectively, in direct contact with each other, as shown in FIG. 3A. A laminate 10e of FIG. 3B is the same as the laminate 10c of FIG. 3B, except that the bases 14 are provided on the surfaces of the pressure-sensitive adhesive/adhesive layers 12 on the sides facing away from the void-containing layer 11, respectively, in direct contact with each other, as shown in FIG. 3B. In FIGs. 3A and 3B, the bases 14 are provided on both sides of the laminate. However, the present application is not limited thereto, and for example, the base 14 may be provided only on one side of the laminate. Further, in FIGs. 3A and 3B, the base 14 is provided so as to be in direct contact with the void-containing layer 11 or the pressure-sensitive adhesive/adhesive layer 12. However, the present application is not limited thereto, and for example, other component(s) may be interposed between the base 14 and the void-containing layer 11 or the pressure-sensitive adhesive/adhesive layer 12. The other component(s) is not particularly limited, and may be, for example, an optical functional layer. The optical functional layer is also not particularly limited, and may be, for example, an optical functional layer used in a general optical film, such as a microlens film, a prism film, a diffusion film, a polarized reflection film, a polarizing film, a retardation film, a high refractive index

layer, and the like.

As described above, in the laminate of the present application, after a heat durability test of maintaining a temperature at 95°C for 1000 hours, the void-containing layer may have a void retention rate of more than 50 vol%, for example, 55 vol% or more, for example, 60 vol% or more, for example, 65 vol% or more, for example, 70 vol% or more, or for example, 75 vol% or more, and the upper limit of the void retention rate is not particularly limited, and is ideally 100 vol%, for example, 98 vol% or less, for example, 95 vol% or less, for example, 90 vol% or less, for example, 85 vol% or less, or for example, 80 vol% or less.

As to the laminate of the present application, for example, the light transmittance of the laminate of the pressure-sensitive adhesive layer and the void-containing layer or the light transmittance of the laminate of the pressure-sensitive adhesive layer, the intermediate layer, and the void-containing layer may be 80% or more. For example, the haze of the laminate may be 3% or less. The light transmittance may be, for example, 82% or more, 84% or more, 86% or more, or 88% or more, and the upper limit is not particularly limited, and is ideally 100%, and may be, for example, 95% or less, 92% or less, 91% or less, or 90% or less. The haze of the laminate of the present application can be measured, for example, by the same method as the method for measuring the haze of the void-containing layer to be described below. The light transmittance is a transmittance of light at a wavelength of 550 nm, and can be measured by, for example, the following measurement method.

(Measurement method of light transmittance)

A spectrophotometer "U-4100" (trade name, manufactured by Hitachi, Ltd.) is used, and the laminate is used as a sample to be measured. The total light transmittance (light transmittance) of the sample is measured with the total light transmittance of air being considered as 100%. The value of the total light transmittance (light transmittance) is a value measured at a wavelength of 550 nm.

In the laminate of the present invention, for example, the pressure-sensitive adhesive/adhesive layer may have a pressure-sensitive adhesive force or an adhesive force of 0.7N/25 mm or more, 0.8N/25 mm or more, 1.0N/25 mm or more, or 1.5N/25 mm or more, and 50N/25 mm or less, 30N/25 mm or less, 10N/25 mm or less, 5N/25 mm or less, or 3N/25 mm or less. From the viewpoint of risks of peeling off during handling when the laminate is attached to another layer, it is preferable that the pressure-sensitive adhesive force or the adhesive force of the pressure-sensitive adhesive/adhesive layer be not too low. On the other hand, from the viewpoint of rework at the time of reattachment, it is preferable that the pressure-sensitive adhesive force or the adhesive force of the pressure-sensitive adhesive/adhesive layer be not too high. The pressure-sensitive adhesive force or the adhesive force of the pressure-sensitive adhesive/adhesive layer can be measured, for example, as follows.

(Measurement method of pressure-sensitive adhesive force or adhesive force)

From the laminated film of the present invention (film in which the laminate of the present invention is formed on a resin film base), a rectangular strip-shaped piece with a size of 50 mm × 140 mm is obtained as a sample, and the sample is fixed to a stainless plate with a double-sided tape. An acrylic pressure-sensitive adhesive layer (thickness: 20 μm) is attached to a PET film (T100, manufactured by Mitsubishi Plastics, Inc.), and the thus-obtained pressure-sensitive adhesive tape is cut into a piece with a size of 25 mm × 100 mm. The thus-obtained cut piece is attached to the laminated film of the present invention on the side facing away from the resin film to form a laminate of the PET film and the laminated film. Then, the sample is chucked in an autograft tensile testing machine (AG-Xplus, manufactured by Shimadzu Corporation) with a distance between chucks being 100 mm, and the tensile test is performed at a tensile speed of 0.3 m/min. The mean value of the 50 mm peel test data is set as the adhesive force, i.e., pressure-sensitive adhesive force. The adhesive force can also be measured by the same measurement method. In the present invention, there is no clear distinction between the "pressure-sensitive adhesive force" and the "adhesive force".

The laminate of the present invention may be formed on a base such as, for example, a film. The film may be, for example, a resin film. Regarding the "film" and the "sheet", generally, the one having a relatively small thickness is called a "film" and the one having a relatively large thickness is called a "sheet" in some cases, however, in the present invention, there is no particular distinction between the "film" and the "sheet".

The base is not limited to particular bases, and for example, a base made of a thermoplastic resin, a base made of glass, an inorganic base plate typified by silicon, a plastic formed of a thermosetting resin, an element such as a semiconductor, or a carbon fiber-based material typified by carbon nanotube can be favorably used. The base, however, is by no means limited thereto. Examples of the form of the base include a film and a plate. Examples of thermoplastic resin include polyethylene terephthalate (PET), acrylic resins, cellulose acetate propionate (CAP), cycloolefin polymer (COP), triacetylcellulose (TAC), polyethylene naphthalate (PEN), polyethylene (PE), and polypropylene (PP).

The optical member of the present invention is not particularly limited, and may be, for example, an optical film including the laminate of the present invention.

The optical apparatus (optical device) of the present invention is not particularly limited, and may be, for example, an image display device, an illumination device, or the like. Examples of the image display device include a liquid crystal display, an organic electro luminescence (EL) display, and a micro light emitting diode (LED) display. The illumination device may be, for example, an organic EL illumination, or the like.

[2. Void-containing layer]

The void-containing layer in the laminate of the present invention (hereinafter also referred to as the "void-containing layer of the present invention") will be described below with reference to examples. It is to be noted, however, that the void-containing layer of the present invention is not limited thereto.
The void-containing layer of the present invention may have, for example, a void fraction of 35 vol% or more and a peak pore diameter of 50 nm or less. However, this merely is an example, and the void-containing layer of the present invention is not limited thereto.
The void fraction may be, for example, 35 vol% or more, 38 vol% or more, or 40 vol% or more, and 90 vol% or less, 80 vol% or less, or 75 vol% or less. The void-containing layer of the present invention may be, for example, a highly void-containing layer having a void fraction of 60 vol% or more.
The void fraction can be measured, for example, by the following measurement method.

(Measurement method of void fraction)

If the layer whose void fraction is to be measured is a single layer containing voids, the ratio (volume ratio) between the component of the layer and the air can be calculated by a standard method (for example, measuring weight and volume to calculate the density), whereby the void fraction (vol%) can be calculated. Further, since the refractive index and the void fraction have a correlation, the void fraction can be calculated from the value of the refractive index as a layer, for example. Specifically, the void fraction is calculated according to the Lorentz-Lorenz's formula from the value of the refractive index measured by an ellipsometer.
The void-containing layer of the present invention can be produced, for example, by chemical bonding of gel pulverized products (microporous particles) as will be described below. In this case, the voids of the void-containing layer can be divided into three types (1) to (3) below for convenience.

(1) Voids contained in raw material gel itself (inside the particles)
(2) Voids contained in gel pulverized product unit
(3) Voids between gel pulverized products created by deposition of gel pulverized products

The voids (2) are voids formed during pulverization, which are different from the voids (1) that can be formed in each block when each particle group generated by pulverizing a gel is regarded as one mass (block) regardless of the size or the like of the gel pulverized product (microporous particle). The voids (3) are voids created because of irregularity in the sizes or the like of the gel pulverized products (microporous particles) in pulverization (e.g., medialess pulverization). The void-containing layer of the present invention includes the voids (1) to (3), whereby an appropriate void fraction and peak pore diameter can be achieved, for example.
The peak pore diameter may be, for example, 5 nm or more, 10 nm or more, or 20 nm or more, and 50 nm or less, 40 nm or less, or 30 nm or less. In the void-containing layer, if the peak pore diameter is too large in a state where the void fraction is high, light is scattered, which makes the void-containing layer opaque. Further, in the present invention, the lower limit of the peak pore diameter of the void-containing layer is not particularly limited, and it is preferable that the peak pore diameter be not too small because it is difficult to increase the void fraction if the peak pore diameter is too small. In the present invention, the peak pore diameter can be measured, for example, by the following method.

(Measurement method of peak pore diameter)

The peak pore diameter is calculated from the results of the BJH plot and the BET plot by nitrogen adsorption and the isothermal adsorption line using a pore distribution/specific surface area analyzer ("BELLSORP MINI" (trade name), manufactured by MicrotracBEL Corp.).
The thickness of the void-containing layer of the present invention is not particularly limited, and may be, for example, 100 nm or more, 200 nm or more, or 300 nm or more, and 10,000 nm or less, 5,000 nm or less, or 2,000 nm or less.
The void-containing layer of the present invention uses pulverized products of the porous gel material, for example. Thus, the three-dimensional structure of the porous gel material is destroyed, whereby a new three-dimensional structure different from that of the porous gel material is formed. The void-containing layer of the present invention becomes a layer having a new pore structure (new void-containing structure) that cannot be obtained in a layer formed

of the porous gel material. That is, a nano-scale void-containing layer having a high void fraction can be formed. Moreover, for example, when the void-containing layer of the present invention is a silicone porous material, the pulverized products in the void-containing layer are chemically bonded to each other while adjusting the number of functional groups having siloxane bonds of the silicon compound gel, for example. Here, the "silicone porous material" refers to a polymer porous material containing a siloxane bond, and includes, for example, a porous material containing silsesquioxane as a structural unit. Furthermore, a new three-dimensional structure is formed as a void-containing layer precursor, and pulverized products are thereafter bonded chemically (e.g., crosslinked) to each other in bonding. Thus, when the void-containing layer of the present invention is a functional porous material, for example, the void-containing layer has a structure with void spaces while maintaining sufficient strength and sufficient flexibility. Therefore, according to the present invention, the void-containing layer can be easily and simply applied to various objects.

For example, the void-containing layer of the present invention includes pulverized products of a porous gel material as will be described below, and the pulverized products are chemically bonded to each other. In the void-containing layer of the present invention, the form of the chemical bonding (chemical bond) between the pulverized products is not limited to particular forms. Specifically, the chemical bonds may be cross-linking bonds, for example. The method for chemically bonding the pulverized products to each other is as described in detail in, for example, the aforementioned method for producing the void-containing layer.

The cross-linking bonds are siloxane bonds, for example. Examples of the siloxane bonds include T2, T3, and T4 bonds shown below. When the silicone porous material of the present invention has siloxane bonds, the silicone porous material may have any one of the T2, T3, and T4 bonds, any two of them, or all three of them, for example. As the proportions of T2 and T3 among the siloxane bonds become higher, the silicone porous material becomes more flexible, so that it is expected that the silicone porous material exhibits characteristics intrinsic to the gel. However, the film strength of the silicone porous material is deteriorated. On the other hand, as the proportion of T4 among the siloxane bonds becomes higher, high film strength is more likely to be achieved, whereas the sizes of the void spaces become smaller, resulting in deteriorated flexibility. Thus, it is preferable to adjust the proportions of T2, T3, and T4 depending on the intended use of the silicone porous material, for example.

T2

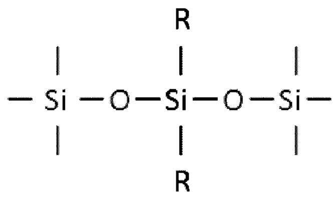

T3

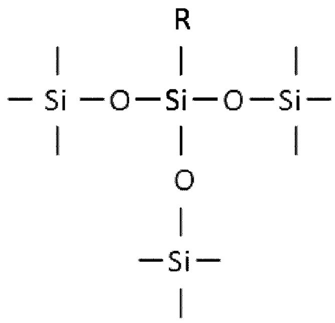

T4

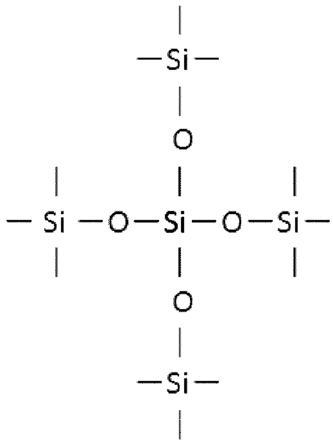

In the case where the void-containing layer of the present invention has the siloxane bonds, the ratio of T2, T3, and T4 expressed relatively assuming that the ratio of T2 is " 1" is as follows, for example: T2 : T3 : T4 = 1 : [1 to 100] : [0 to 50], 1 : [1 to 80] : [1 to 40], or 1 : [5 to 60] : [1 to 30].

It is preferable that silicon atoms contained in the void-containing layer of the present invention be bonded to each other through siloxane bonds, for example. As a specific example, the proportion of unbonded silicon atoms (i.e., residual silanol) among all the silicon atoms contained in the silicone porous material is less than 50%, 30% or less, or 15% or less, for example.

The void-containing layer of the present invention has a pore structure. In the present invention, the size of each void space in the pore structure indicates, out of the diameter of the long axis and the diameter of the short axis of the void space (pore), the diameter of the long axis. The void space (pore) size is from 5 nm to 50 nm, for example. The lower limit of the size is, for example, 5 nm or more, 10 nm or more, or 20 nm or more. The upper limit of the size is, for example, 50 nm or less, 40 nm or less, or 30 nm or less. The range of the size is, for example, from 5 nm to 50 nm or from 10 nm to 40 nm. A preferable void space size is determined depending on the use of the void-containing structure. Thus, it is necessary to adjust the void space size to a desired size according to the intended use, for example.

The void space size can be evaluated in the following manner, for example.

(SEM observation of cross section of void-containing layer)

In the present invention, the void-containing layer can be observed and analyzed using a scanning electron microscopy (SEM). Specifically, for example, the void-containing layer is subjected to FIB processing (acceleration voltage: 30 kV) while being cooled, and the cross-sectional electronic image of the obtained cross-sectional sample can be obtained by FIB-SEM ("Helios NanoLab 600" (trade name), manufactured by FEI Company, acceleration voltage: 1 kV) at an observing magnification of 100,000×.

(Evaluation of void space size)

In the present invention, the void space size can be quantified according to the BET test. Specifically, 0.1 g of a sample (the void-containing layer of the present invention) is set in a capillary of a pore distribution/surface area measurement apparatus ("BELLSORP MIN" (trade name), manufactured by MicrotracBEL Corp.), and dried under reduced pressure at room temperature for 24 hours to remove gas in the void-containing structure. Then, a BET plot, a BJH plot, and an adsorption isotherm are created by causing the sample to adsorb nitrogen gas, whereby the pore distribution is determined. On the basis of the thus-determined pore distribution, the void space size can be evaluated.

The void-containing layer of the present invention may have, for example, a pore structure (porous structure) as described above, and the pore structure may be an open-cell structure in which pores are interconnected with each other, for example. The open-cell structure means that, for example, pores three-dimensionally communicate with each other in the void-containing layer. In other words, the open-cell structure means the state where void spaces inside the pore structure are interconnected with each other. When a porous material has an open-cell structure, this structure allows the bulk body to have a higher void fraction. However, in the case where closed-cell particles such as hollow silica particles are used, an open-cell structure cannot be formed. In contrast, in the void-containing layer of the present invention, an open-cell structure can be formed easily for the following reason. Sol particles (pulverized products of a porous gel material for forming a sol) each have a dendritic structure, so that the open-cell structure is formed as a result of sedimentation and deposition of the dendritic particles in a coating film (a coating film formed of a sol containing pulverized products of the porous gel material). Further, it is more preferable that the void-containing layer of the present invention form a monolith structure, which is an open-cell structure including two or more types of micropore distributions. The monolith structure refers to a layered structure including a structure in which nano-sized minute void spaces are present and an open-cell structure formed by aggregation of the nano-sized void spaces, for example. When the monolith structure is formed, for example, the film strength is imparted by the minute void spaces while a high void fraction is achieved by the presence of the void spaces forming a bulky open-cell structure. Thus, both film strength and a high void fraction can be attained. In order to form such a monolith structure, for example, first, in the porous gel material before being pulverized into the pulverized products, it is important to control the micropore distributions in a void-containing structure to be generated. Also, the monolith structure can be formed by, for example, controlling, at the time of pulverizing the porous gel material, the particle sizes of the pulverized products so that a desired particle size distribution can be obtained.

In the void-containing layer of the present invention, the haze value indicating the transparency is not particularly limited, and the lower limit thereof is, for example, 0.1% or more, 0.2% or more, or 0.3% or more, the upper limit thereof is, for example, 10% or less, 5% or less, or 3% or less, and the range thereof is, for example, from 0.1% to 10%, from 0.2% to 5%, or from 0.3% to 3%.

The haze value can be measured in the following manner, for example.

(Evaluation of haze value)

A void-containing layer (the void-containing layer of the present invention) is cut into a piece with a size of 50 mm × 50 mm, and the thus-obtained cut piece is set in a haze meter (HM-150, manufactured by Murakami Color Research Laboratory) to measure the haze value. The haze value is calculated by the following equation.

$$\text{Haze value (\%)} = [\text{diffuse transmittance (\%)}/\text{total light transmittance (\%)}] \times 100\ (\%)$$

The "refractive index" of a given medium generally refers to the ratio of transmission speed of the wavefront of light in vacuum to the phase velocity of the light in the medium. The refractive index of the void-containing layer of the present invention is not particularly limited, and the upper limit thereof is, for example, 1.3 or less, less than 1.3, 1.25 or less, 1.2 or less, or 1.15 or less, the lower limit thereof is, for example, 1.05 or more, 1.06 or more, or 1.07 or more,

and the range thereof is, for example, 1.05 or more and 1.3 or less, 1.05 or more and less than 1.3, 1.05 or more and 1.25 or less, 1.06 or more and less than 1.2, or 1.07 or more and 1.15 or less.

In the present invention, the refractive index refers to the one measured at a wavelength of 550 nm, unless otherwise stated. The method for measuring the refractive index is not particularly limited. For example, the refractive index can be measured in the following manner.

(Evaluation of refractive index)

A void-containing layer (the void-containing layer of the present invention) is formed on an acrylic film, and the obtained laminate is then cut into a piece with a size of 50 mm × 50 mm. The thus-obtained cut piece is attached to a surface of a glass plate (thickness: 3 mm) with a pressure-sensitive adhesive layer. The central portion (diameter: about 20 mm) of the back surface of the glass plate is painted entirely with black ink, thereby preparing a sample that allows no reflection at the back surface of the glass plate. The sample is set in an ellipsometer (VASE, manufactured by J. A. Woollam Japan), and the refractive index is measured at a wavelength of 550 nm and at an incidence angle of 50° to 80°. The mean value of the thus-obtained measured values is set as the refractive index.

The thickness of the void-containing layer of the present invention is not particularly limited, and the lower limit thereof is, for example, 0.05 μm or more or 0.1 μm or more, and the upper limit thereof is, for example, 1000 μm or less or 100 μm or less, and the range thereof is, for example, from 0.05 to 1000 μm or 0.1 to 100 μm.

The form of the void-containing layer of the present invention is not particularly limited, and may be, for example, in the form of a film, a block, or the like.

The method for producing a void-containing layer of the present invention is not particularly limited, and can be produced by the method described in, for example, WO 2019/065999 and WO 2019/065803. The descriptions of the publications are incorporated herein by reference.

[3. Pressure-sensitive adhesive/adhesive coating solution]

In the laminate of the present invention, the pressure-sensitive adhesive/adhesive layer may be formed using, for example, a pressure-sensitive adhesive/adhesive coating solution as described above. In the present invention, the "pressure-sensitive adhesive" and the "adhesive" are not always clearly distinguishable from each other, as will be described below. In the present invention, the term "pressure-sensitive adhesive/adhesive" includes both "pressure-sensitive adhesive" and "adhesive" unless otherwise specified. The pressure-sensitive adhesive/adhesive coating solution may contain, for example, the (meth)acrylic polymer, may further contain, for example, a crosslinking agent (e.g., an isocyanate-based crosslinking agent), and may further contain, for example, a monomer having one or two reactive double bonds per molecule and an organic peroxide. The pressure-sensitive adhesive/adhesive coating solution is not particularly limited, and is exemplified as follows, for example.

In the pressure-sensitive adhesive/adhesive layer of the laminate of the present invention, the (meth)acrylic polymer may be substantially free of a (meth)acrylic polymer having a polystyrene-equivalent molecular weight of 100,000 or less, as described above. The (meth)acrylic polymer, for example, may contain 1 to 30 wt% of or preferably contain 3 to 20 wt % of a nitrogen-containing monomer as a monomer unit. The (meth)acrylic polymer may have, for example, a polydispersity (weight average molecular weight (Mw)/number average molecular weight (Mn)) of 3.0 or less. The lower limit thereof is not particularly limited, and is, for example, 1.0 or more, 1.5 or more, or 2.0 or more. The pressure-sensitive adhesive/adhesive coating solution may be, for example, a pressure-sensitive adhesive/adhesive coating solution containing the (meth)acrylic polymer.

In the pressure-sensitive adhesive/adhesive coating solution, for example, the (meth)acrylic polymer may contain, as a monomer component, 3 to 20 wt% of a heterocycle-containing acrylic monomer, a polymerizable functional group, and 0.5 to 5 wt% of (meth)acrylic acid, 0.05 to 2 wt% of hydroxyalkyl (meth)acrylate, and 83 to 96.45 wt% of alkyl (meth)acrylate. This (meth)acrylic polymer may be used as a base polymer.

As the heterocycle-containing acrylic monomer, for example, one having a polymerizable functional group and having a heterocyclic ring can be used without any particular limitation. Examples of the polymerizable functional group include a (meth)acryloyl group and a vinyl ether group. Of these, the (meth)acryloyl group is preferred. Examples of heterocycle include morpholine rings, piperidine rings, pyrrolidine rings, and piperazine rings. Examples of the heterocycle-containing acrylic monomer include N-acryloylmorpholine, N-acryloylpiperidine, N-methacryloylpiperidine, and N-acryloylpyrrolidine. Among these, N-acryloylmorpholine is preferable. The heterocycle-containing acrylic monomer can improve the durability of any of heat resistance and moisture resistance in the case of thinning the pressure-sensitive adhesive layer (pressure-sensitive adhesive/adhesive layer). In the following description, N-acryloylmorpholine is sometimes referred to as "ACMO".

The heterocycle-containing acrylic monomer is preferable from the viewpoint of improving the pressure-sensitive adhesive force of the pressure-sensitive adhesive layer (pressure-sensitive adhesive/adhesive layer) to the optical film.

In particular, the heterocycle-containing acrylic monomer is preferable from the viewpoint of improving the pressure-sensitive adhesive force to cyclic polyolefin such as a norbornene resin, and the heterocycle-containing acrylic monomer is suitable when a cyclic polyolefin is used as the optical film.

The heterocycle-containing acrylic monomer is used, for example, in a proportion of 3 to 20 wt% relative to the total amount of monomer components forming the (meth)acrylic polymer. The proportion of the heterocycle-containing acrylic monomer may be, for example, 4 to 19 wt% or 6 to 18 wt%. The proportion of the heterocycle-containing acrylic monomer is preferably not less than the above range from the viewpoints of the heat resistance and the moisture resistance in the case of thinning the pressure-sensitive adhesive layer (pressure-sensitive adhesive/adhesive layer). In addition, the proportion of the heterocycle-containing acrylic monomer is preferably not more than the above range from the viewpoint of the moisture resistance in the case of thinning the pressure-sensitive adhesive layer (pressure-sensitive adhesive/adhesive layer). In addition, the proportion of the heterocycle-containing acrylic monomer is preferably not more than the above range from the viewpoint of improving the attaching property of the pressure-sensitive adhesive layer (pressure-sensitive adhesive/adhesive layer). In addition, the proportion of the heterocycle-containing acrylic monomer is preferably not more than the above range from the viewpoint of the pressure-sensitive adhesive force.

The (meth)acrylic acid is preferably acrylic acid.

The (meth)acrylic acid is used, for example, in a proportion of 0.5 to 5 wt% relative to the total amount of monomer components forming the (meth)acrylic polymer. The proportion of the (meth)acrylic acid may be, for example, 1 to 4.5 wt% or 1.5 to 4 wt%. The proportion of the (meth)acrylic acid is preferably not less than the above range from the viewpoint of heat resistance in the case of thinning the pressure-sensitive adhesive layer (pressure-sensitive adhesive/adhesive layer). In addition, the proportion of the (meth)acrylic acid is preferably not more than the above range from the viewpoints of the heat resistance and the moisture resistance in the case of thinning the pressure-sensitive adhesive layer. In addition, the proportion of the (meth)acrylic acid is preferably not more than the above range from the viewpoint of the pressure-sensitive adhesive force.

As the hydroxyalkyl (meth)acrylate, for example, one having a polymerizable functional group and having a hydroxyl group can be used without any particular limitation. Preferable examples of the hydroxyalkyl (meth)acrylate include hydroxyalkyl(meth)acrylates such as 2-hydroxyethyl (meth)acrylate, 2-hydroxybutyl (meth)acrylate, 3-hydroxypropyl (meth)acrylate, 4-hydroxybutyl (meth)acrylate, 6-hydroxyhexyl (meth)acrylate, 8-hydroxyoctyl (meth)acrylate, 10-hydroxydecyl (meth)acrylate, and 12-hydroxylauryl (meth)acrylate.

The hydroxyalkyl (meth)acrylate is used, for example, in proportion of 0.05 to 2 wt% relative to the total amount of monomer components forming the (meth)acrylic polymer. The proportion of the hydroxyalkyl (meth)acrylate may be, for example, 0.075 to 1.5 wt% or 0.1 to 1 wt%. The proportion of the hydroxyalkyl (meth)acrylate is preferably not less than the above range from the viewpoint of the heat resistance in the case of thinning the pressure-sensitive adhesive layer (pressure-sensitive adhesive/adhesive layer). In addition, the proportion of the hydroxyalkyl (meth)acrylate is preferably not more than the above range from the viewpoints of the heat resistance and the moisture resistance in the case of thinning the pressure-sensitive adhesive layer. In addition, the proportion of the hydroxyalkyl (meth)acrylate is preferably not more than the above range from the viewpoint of the pressure-sensitive adhesive force.

As to the alkyl (meth)acrylate, for example, the alkyl group of the alkyl (meth)acrylate may have an average carbon number of about 1 to 12. Note that (meth)acrylate refers to acrylate and/or methacrylate, and has the same meaning as (meth) of the present invention. Specific examples of the alkyl (meth)acrylate include methyl (meth)acrylate, ethyl (meth)acrylate, n-butyl (meth)acrylate, 2-ethylhexyl (meth)acrylate, isooctyl (meth)acrylate, isononyl (meth)acrylate, and lauryl (meth)acrylate, and one of them may be used alone or two or more of them may be used in combination. Among these, alkyl (meth)acrylate having 1 to 9 carbon atoms in the alkyl group is preferable.

The alkyl (meth)acrylate is used, for example, in a proportion of 83 to 96.45 wt% relative to the total amount of the monomer components forming the(meth)acrylic polymer. The alkyl (meth)acrylate is usually the remainder other than the heterocycle-containing acrylic monomer, (meth)acrylic acid, and hydroxyalkyl (meth)acrylate.

As the monomer components forming the (meth)acrylic polymer, in addition to the monomer mentioned above, for example, any monomer other than those mentioned above may be used in a range of 10% or less of the total amount of the monomers, as long as the object of the present invention is not impaired.

Examples of such a monomer include acid anhydride group-containing monomers such as maleic anhydride and itaconic anhydride; a caprolactone adduct of acrylic acid; sulfonic acid group-containing monomers such as styrenesulfonic acid, allylsulfonic acid, 2-(meth)acrylamido-2-methylpropanesulfonic acid, (meth)acrylamidopropanesulfonic acid, sulfopropyl (meth)acrylate, and (meth)acryloyloxynaphthalenesulfonic acid; and a phosphate group-containing monomer such as 2-hydroxyethyl acryloylylphosphate. In addition, nitrogen-containing vinyl monomers can be used, and examples thereof include maleimide, N-cyclohexylmaleimide, N-phenylmaleimide; (N-substituted) amide monomers such as (meth)acrylamide, N,N-dimethyl (meth)acrylamide, N,N-diethyl (meth)acrylamide, N-hexyl (meth)acrylamide, N-methyl (meth)acrylamide, N-butyl (meth)acrylamide, N -butyl (meth)acrylamide, N-methylol (meth)acrylamide, and N-methylolpropane (meth)acrylamide; alkylaminoalkyl (meth)acrylate monomers such as (meth)aminoethyl acrylate, aminopropyl (meth)acrylate, N,N-dimethylaminoethyl (meth)acrylate, t-butylaminoethyl (meth)acrylate, and 3-(3-pyrinidyl)propyl (meth)acrylate) acrylate; alkoxyalkyl (meth)acrylate monomers such as methoxyethyl (meth)acrylate and ethoxyethyl (meth)acrylate; and succinimide-based monomers such as N-(meth)acryloyloxymethylenesuccinimide, N-(meth)acryloyl-6-oxyhexamethylenesuccinimide, and N-(meth)acryloyl-8-oxyoctamethylenesuccinimide.

Vinyl monomers such as vinyl acetate, vinyl propionate, N-vinylpyrrolidone, methylvinylpyrrolidone, vinylpyridine, vinylpiperidone, vinylpyrimidine, vinylpiperazine, vinylpyrazine, vinylpyrrole, vinylimidazole, vinyloxazole, vinylmorpholine, N-vinylcarboxylic acid amides, styrene, α-methylstyrene, and N-vinylcaprolactam; cyanoacrylate monomers such as acrylonitrile and methacrylonitrile; epoxy group-containing acrylic monomers such as glycidyl (meth)acrylate; glycol-based acrylic ester monomers such as polyethylene glycol (meth)acrylate, polypropylene glycol (meth)acrylate, methoxyethylene glycol (meth)acrylate, and methoxypolypropylene glycol (meth)acrylate; and acrylic acid ester monomers such as tetrahydrofurfuryl (meth)acrylate, fluorine (meth)acrylate, silicone (meth)acrylate, and 2-methoxyethyl acrylate can also be used.

Further, examples of the copolymerizable monomer other than the above include silane-based monomers containing silicon atoms. Examples of the silane-based monomer include 3-acryloxypropyltriethoxysilane, vinyltrimethoxysilane, vinyltriethoxysilane, 4-vinylbutyltrimethoxysilane, 4-vinylbutyltriethoxysilane, 8-vinyloctyltrimethoxysilane, 8-vinyloctyltriethoxysilane, 10-methacryloyloxydecyltrimethoxysilane, 10-acryloyloxydecyltrimethoxysilane, 10-methacryloyloxydecyltriethoxysilane, and 10-acryloyloxydecyltriethoxysilane.

The weight average molecular weight (Mw) of the (meth)acrylic polymer used in the pressure-sensitive adhesive layer in the laminate of the present invention may be, for example, 700,000 to 4 million. The weight average molecular weight may be, for example, 1.5 million to 4 million, for example, 1.8 million to 3.8 million, 2 million to 3.5 million, or 2.2 million to 3.3 million. Further, for example, the weight average molecular weight may be 800,000 to 3.5 million, for example, 1.5 million to 3.4 million or 2 million to 3.3 million. The weight average molecular weight is preferably not smaller than the above range from the viewpoints of the heat resistance and the moisture resistance in the case of thinning the pressure-sensitive adhesive layer (pressure-sensitive adhesive/adhesive layer). In addition, the weight average molecular weight is preferably not larger than the above range from the viewpoints of the durability, the attaching property, and the pressure-sensitive adhesive force in the case of thinning the pressure-sensitive adhesive layer. In the present invention, the weight average molecular weight is, for example, a value measured by gel permeation chromatography (GPC) and calculated in terms of polystyrene.

The method for producing such a (meth)acrylic polymer is not particularly limited, and known production methods such as solution polymerization, bulk polymerization, emulsion polymerization, and various radical polymerization can be appropriately selected. Further, the (meth)acrylic polymer obtained may be any of a random copolymer, a block copolymer, a graft copolymer, or the like.

In the solution polymerization, for example, ethyl acetate or toluene is used as a polymerization solvent. As a specific example of the solution polymerization, the reaction is carried out under an inert gas stream such as nitrogen by adding a polymerization initiator, for example, at about 50 to 70°C for about 1 to 30 hours.

The polymerization initiator, the chain transfer agent, the emulsifier, and the like used in the radical polymerization are not particularly limited, and can be appropriately selected and used. The weight average molecular weight of the (meth)acrylic polymer can be controlled by the amount of the polymerization initiator, the chain transfer agent, or the like, and the amount thereof to be used is appropriately adjusted according to the types of these.

Examples of the polymerization initiator include, but not limited to, azo-based initiators such as 2,2'-azobisisobutyronitrile, 2,2'-azobis(2-amidinopropane)dihydrochloride, 2,2'-azobis[2-(5-methyl-2-imidazoline-2-yl)propane] dihydrochloride, 2,2'-azobis(2-methylpropionamidine)disulfate, 2,2'-azobis(N,N'-dimethyleneisobutylamidine), and 2,2'-azobis[N-(2-carboxyethyl)-2-methylpropionamidine]hydrate (VA-057, manufactured by Wako Pure Chemical Industries, Ltd.); persulfates such as potassium persulfate and ammonium persulfate; peroxide -based initiators such as di(2-ethylhexyl)peroxydicarbonate, di(4-t-butylcyclohexyl)peroxydicarbonate, di-sec-butyl peroxydicarbonate, t-butyl peroxyneodecanoate, t-hexyl peroxypivalate, t-butyl peroxypivalate, dilauroyl peroxide, di-n-octanoyl peroxide, 1,1,3,3-tetramethylbutylperoxy-2-ethylhexanoate, di(4-methylbenzoyl)peroxide, dibenzoyl peroxide, t-butyl peroxyisobutyrate, 1,1-di(t-hexyl peroxy)cyclohexane, t-butyl hydroperoxide, and hydrogen peroxide; and redox initiators of a combination of peroxide and reducing agents, e.g., a combination of persulfate and sodium bisulfite and a combination of peroxide and sodium ascorbate.

One of the polymerization initiators may be used alone or two or more of them may be mixed to use. The total content of the polymerization initiator may be, for example, about 0.005 to 1 parts by weight or about 0.02 to 0.5 parts by weight relative to 100 parts by weight of the monomer.

When producing the (meth)acrylic polymer having the aforementioned weight average molecular weight by using, for example, 2,2'-azobisisobutyronitrile as the polymerization initiator, the amount of the polymerization initiator used may be, for example, about 0.06 to 0.2 parts by weight or about 0.08 to 0.175 parts by weight relative to 100 parts by weight of the total amount of the monomer components.

Examples of the chain transfer agent include lauryl mercaptan, glycidyl mercaptan, mercaptoacetic acid, 2-mercaptoethanol, thioglycolic acid, 2-ethylhexyl thioglycolate, and 2,3-dimercapto-1-propanol. One of the chain transfer

agents may be used alone or two or more of them may be mixed to use. The total content of the chain transfer agent is, for example, about 0.1 parts by weight or less relative to 100 parts by weight of the total amount of the monomer components.

Examples of the emulsifier used in the emulsion polymerization include anionic emulsifiers such as sodium lauryl sulfate, ammonium lauryl sulfate, sodium dodecylbenzene sulfonate, ammonium polyoxyethylene alkyl ether sulfate, and sodium polyoxyethylene alkyl phenyl ether sulfate; and nonionic emulsifiers such as polyoxyethylene alkyl ether, polyoxyethylene alkyl phenyl ether, polyoxyethylene fatty acid ester, and polyoxyethylene-polyoxypropylene block polymer. One of the emulsifiers may be used alone or two or more of them may be used in combination.

Further, specific examples of the emulsifying agent, into which a radically polymerizable functional group such as a propenyl group or an allyl ether group is introduced as a reactive emulsifier, include Akuaron HS-10, HS-20, KH-10, BC-05, BC-10, and BC-20 (all of which are manufactured by DKS Co., Ltd.) and ADEKA REASOAP SE10N (manufactured by ADEKA CORPORATION). Since the reactive emulsifier is incorporated into the polymer chain after the polymerization, the water resistance is improved, which is preferable. The amount of the emulsifier to be used is preferably 0.3 to 5 parts by weight relative to 100 parts by weight of the total amount of the monomer components, and more preferably 0.5 to 1 parts by weight relative to 100 parts by weight of the total amount of the monomer components from the viewpoints of the polymerization stability and the mechanical stability.

The content of the (meth)acrylic polymer in the pressure-sensitive adhesive/adhesive coating solution is not particularly limited, and may be, for example, 3 mass% or more or 5 mass% or more, and may be, for example, 30 mass% or less, 20 mass% or less, or 10 mass% or less, relative to the total mass of the pressure-sensitive adhesive/adhesive coating solution.

The pressure-sensitive adhesive/adhesive coating solution may or may not include a monomer having one or two reactive double bonds per molecule. The monomer having one or two reactive double bonds per molecule is not particularly limited, and examples thereof include acrylic monomers, vinyl-based monomers, methacrylic monomers, and allyl-based monomers, and acrylic monomers are more preferable from the viewpoint of the reaction rate of the graft reaction. The acrylic monomer is not particularly limited, and may be, for example, the same as the monomer exemplified as the monomer component of the acrylic polymer. In the monomer having one or two reactive double bonds per molecule, the structure of the side chain is not particularly limited, and a heterocycle-containing monomer is preferable from the viewpoint of achieving a high elastic modulus within a proper range and a reduction in a semi-polymer amount at the same time.

When the pressure-sensitive adhesive/adhesive coating solution contains the monomer having one or two reactive double bonds per molecule, the content thereof is not particularly limited, and the content in the pressure-sensitive adhesive/adhesive coating solution may be, for example, 0.1 mass% or more, 0.5 mass% or more, or 1 mass% or more, and may be, for example, 30 mass% or less, 20 mass% or less, or 10 mass% or less relative to the total mass of the (meth)acrylic polymer.

The pressure-sensitive adhesive/adhesive coating solution may or may not contain a crosslinking agent, for example, as described above. The crosslinking agent is not particularly limited, and examples thereof include an isocyanate-based crosslinking agent and an epoxy-based crosslinking agent. The isocyanate-based crosslinking agent is not particularly limited, and examples thereof include aromatic isocyanates such as tolylene diisocyanate, xylene diisocyanate, and the like, alicyclic isocyanates such as isophorone diisocyanate and the like, and aliphatic isocyanates such as hexamethylene diisocyanate and the like. The epoxy-based crosslinking agent is not particularly limited, and examples thereof include a bisphenol A epichlorohydrin type epoxy resin, ethylene glycol diglycidyl ether, polyethylene glycol diglycidyl ether, glycerin diglycidyl ether, glycerin triglycidyl ether, 1,6-hexanediol diglycidyl ether, trimethylolpropane triglycidyl ether, sorbitol polyglycidyl ether, polyglycerol polyglycidyl ether, pentaerythritol polyglycidyl erythritol, diglycerol polyglycidyl ether, 1,3'-bis(N,N-diglycidylaminomethyl)cyclohexane, and N,N,N', N'-tetraglycidyl-m-xylenediamine.

Specific examples of the isocyanate-based crosslinking agent include lower aliphatic polyisocyanates such as butylenediisocyanate and hexamethylene diisocyanate; alicyclic isocyanates such as cyclopentylene diisocyanate, cyclohexylene diisocyanate, and isophorone diisocyanate; aromatic diisocyanates such as 2,4-tolylene diisocyanate, 4,4'-diphenylmethane diisocyanate, xylylene diisocyanate, and polymethylene polyphenyl isocyanate; isocyanate adducts such as a trimethylolpropane/tolylene diisocyanate trimer adduct ("CORONATE® L" (trade name), manufactured by Nippon Polyurethane Industry Co., Ltd.), a trimethylolpropane/hexamethylene diisocyanate trimer adduct ("CORONATE® HL" (trade name), manufactured by Nippon Polyurethane Industry Co., Ltd.), and isocyanurate form of hexamethylene diisocyanate ("CORONATE® HX" (trade name), manufactured by Nippon Polyurethane Industry Co., Ltd.); polyether polyisocyanate; polyester polyisocyanate; and adducts of these with various polyols, and polyisocyanates multifunctionalized with isocyanurate bonds, biuret bonds, allophanate bonds, and the like.

More specifically, examples of the epoxy-based crosslinking agent include "TETRAD-C" manufactured by Mitsubishi Gas Chemical Company, Inc., "TETRAD-X" manufactured by Mitsubishi Gas Chemical Company, Inc., and "S-610" manufactured by Synasia Inc.

One of the crosslinking agents (e.g., an isocyanate-based crosslinking agent and an epoxy-based crosslinking

agent) may be used alone or two or more of them may be used in combination, and the total content of the crosslinking agent may be, for example, 0.02 to 2 parts by mass, 0.04 to 1.5 parts by mass, or 0.05 to 1 parts by mass relative to 100 parts by mass of the (meth)acrylic polymer. The content of the isocyanate-based crosslinking agent is preferably 0.02 parts by mass or more from the viewpoint of cohesive force, and the content of the isocyanate-based crosslinking agent is preferably 2 parts by mass or less from the viewpoint of suppressing or preventing a decrease in adhesive force due to excessive crosslinking formation. The content of the epoxy-based crosslinking agent is preferably 0.01 parts by mass or more from the viewpoint of the void retention rate, and the content of the epoxy-based crosslinking agent is preferably 0.5 parts by mass or less from the viewpoint of peel durability.

The pressure-sensitive adhesive/adhesive coating solution of the present invention may be consisting only of the isocyanate-based crosslinking agent, for example, or may or may not further contain a crosslinking agent other than the isocyanate-based crosslinking agent. Examples of such a crosslinking agent include an organic crosslinking agent and a polyfunctional metal chelate. Examples of the organic crosslinking agent include an epoxy-based crosslinking agent and an imine-based crosslinking agent. The organic crosslinking agent is preferably an isocyanate-based crosslinking agent or an epoxy-based crosslinking agent. A polyfunctional metal chelate is one in which a polyvalent metal is covalently or coordinately bonded to an organic compound. Examples of the polyvalent metallic atom include Al, Cr, Zr, Co, Cu, Fe, Ni, V, Zn, In, Ca, Mg, Mn, Y, Ce, Sr, Ba, Mo, La, Sn, and Ti. The atom in the organic compound to be covalently or coordinately bonded may be, for example, an oxygen atom, and examples of the organic compound include an alkyl ester, an alcohol compound, a carboxylic acid compound, an ether compound, and a ketone compound.

The pressure-sensitive adhesive/adhesive coating solution may or may not contain an organic peroxide, for example. The organic peroxide is not particularly limited, and examples thereof include di(2-ethylhexyl)peroxydicarbonate, di(4-t-butylcyclohexyl)peroxydicarbonate, di-sec-butyl peroxydicarbonate, t-butyl peroxyneodecanoate, t-hexyl peroxypivalate, t-butyl peroxypivalate, dilauroyl peroxide, di-n-octanoyl peroxide, 1,1,3,3-tetramethylbutyl peroxy-2-ethylhexanoate, di(4-methylbenzoyl)peroxide, dibenzoyl peroxide, t-butyl peroxyisobutyrate, 1,1-di(t-hexylperoxy)cyclohexane, and t-butyl hydroperoxide. One of the organic peroxides may be used alone of two or more of them may be used in combination.

When the pressure-sensitive adhesive/adhesive coating solution contains the organic peroxide, the content thereof is not particularly limited, and the content in the pressure-sensitive adhesive/adhesive coating solution may be, for example, 0.02 mass% or more, 0.1 mass% or more, 0.5 mass% or more, 1 mass% or more, or 2.5 mass% or more, and may be, for example, 20 mass% or less, 10 mass% or less, 8 mass% or less, or 6 mass% or less relative to the total mass of the (meth)acrylic polymer.

The pressure-sensitive adhesive/adhesive coating solution may further contain a solvent or the like. The solvent is not particularly limited, and for example, a polymerization solvent used in solution polymerization in the production of the (meth)acrylic polymer may be used as it is.

Further, for the pressure-sensitive adhesive/adhesive coating solution, a tackifier, a plasticizer, a filler containing glass fibers, glass beads, metal powders, other inorganic powders, and the like may be used as appropriate, and various additives may be used as appropriate without departing from the scope of the present invention. Further, the pressure-sensitive adhesive layer (pressure-sensitive adhesive/adhesive layer) may contain fine particles and exhibit light diffusibility.

The pressure-sensitive adhesive/adhesive layer in the laminate of the present invention can be formed using the pressure-sensitive adhesive/adhesive coating solution, for example, by the method to be described below. The pressure-sensitive adhesive/adhesive layer may have a weight average molecular weight of the sol content of 30,000 to 600,000, for example, in molecular weight measurement of the pressure-sensitive adhesive/adhesive layer by gel permeation chromatography. Further, for example, in the molecular weight measurement of the pressure-sensitive adhesive/adhesive layer by gel permeation chromatography, the content of the low molecular weight component having a molecular weight of 10,000 or less in the sol content of the pressure-sensitive adhesive/adhesive layer may be 20 wt % (mass %) or less. By setting the weight average molecular weight of the sol content or the content of the low molecular weight component having a molecular weight of 10,000 or less in the sol content within the specific range, the pressure-sensitive adhesive is less liable to permeate into the voids of the void-containing layer. The weight average molecular weight of the sol content may be, for example, 50,000 or more, for example, 550,000 or less or 500,000 or less, for example, 50,000 to 550,000 or 60,000 to 500,000. The content (proportion) of the component having a molecular weight of 10,000 or less in the sol content may be, for example, 20 wt% or less, for example, 15 wt% or less, or 10 wt% or less relative to the total amount (100 wt%) of the sol content, as described above. The lower limit of the content (proportion) of the component having a molecular weight of 10,000 or less in the sol content is not particularly limited, and may be, for example, 0 wt% or more or more than 0 wt%, or may be, for example, 3 wt% or more. The content (proportion) of the component having a molecular weight of 10,000 or less in the sol content may be, for example, 3 to 15 wt% or 3 to 10 wt%.

[4. Laminate production method]

The laminate production method of the present invention is not particularly limited, and the laminate of the present invention can be produced by, for example, the production method described below. It is to be noted, however, that following description shows merely an illustrative example and by no means limits the present invention. The void-containing layer of the present invention is not particularly limited, and is, for example, as described above. The method for producing the void-containing layer of the present invention is not particularly limited as described above, and can be produced, for example, by the method described in WO 2019/065999 and WO 2019/065803.

The laminate production method of the present invention may include, for example, producing the pressure-sensitive adhesive layer and attaching the pressure-sensitive adhesive layer to the void-containing layer. The method for producing the pressure-sensitive adhesive/adhesive layer may include, for example, coating the pressure-sensitive adhesive/adhesive coating solution of the present invention onto a base, and heat-drying the base coated with the pressure-sensitive adhesive/adhesive coating solution. For example, the pressure-sensitive adhesive/adhesive layer may be formed on the void-containing layer of the present invention by attaching, e.g., an adhesive tape including a base and the pressure-sensitive adhesive/adhesive layer of the present invention laminated on the base to the void-containing layer with the pressure-sensitive adhesive/adhesive layer side of the adhesive tape facing the void-containing layer. In this case, the base of the adhesive tape may be left on or peeled off from the pressure-sensitive adhesive/adhesive layer. In particular, by peeling the base to form a (baseless) void-containing layer-containing pressure-sensitive adhesive/adhesive sheet having no base, the thickness of the sheet can be significantly reduced and the increase in the thickness of the device or the like can be prevented. In the present invention, the terms "pressure-sensitive adhesive" and "pressure-sensitive adhesive layer" respectively refer to an agent and a layer that adhere a substance in a peelable manner, for example. In the present invention, the terms "adhesive" and "adhesive layer" respectively refer to an agent and a layer that adhere a substance in a non-peelable manner, for example. It is to be noted, however, that, in the present invention, the "pressure-sensitive adhesive" and the "adhesive" are not always clearly distinguishable from each other, and also, the "pressure-sensitive adhesive layer" and the "adhesive layer" are not always clearly distinguishable from each other. In the present invention, the pressure-sensitive adhesive/adhesive layer can be produced using the pressure-sensitive adhesive/adhesive coating solution of the present invention, for example, as described above.

The producing the pressure-sensitive adhesive/adhesive layer can be performed, for example, as follows. First, the pressure-sensitive adhesive/adhesive coating solution is produced by mixing all the components of the pressure-sensitive adhesive/adhesive coating solution. The pressure-sensitive adhesive/adhesive coating solution may contain the (meth)acrylic polymer as described above, and may or may not further contain a crosslinking agent (e.g., isocyanate-based crosslinking agent or epoxy-based crosslinking agent), for example. The pressure-sensitive adhesive/adhesive coating solution may contain, for example, the (meth)acrylic polymer, a monomer having one or two reactive double bonds per molecule, a crosslinking agent, and an organic peroxide. In this case, when the pressure-sensitive adhesive/adhesive coating solution contains a component(s) other than these, such a component(s) may be mixed together. For example, the polymerization solvent at the time of producing the (meth)acrylic polymer may not be removed and mixed as a component of the pressure-sensitive adhesive/adhesive coating solution. The method for producing the pressure-sensitive adhesive/adhesive coating solution of the present invention may or may not include a process other than the mixing, and may simply mix all the components of the pressure-sensitive adhesive/adhesive coating solution in the mixing.

Next, the pressure-sensitive adhesive/adhesive coating solution is coated onto a base (coating pressure-sensitive adhesive/adhesive coating solution). The base is not particularly limited, and may be, for example, a base such as a film. As the base, for example, a base made of a thermoplastic resin, a base made of glass, an inorganic base plate typified by silicon, a plastic formed of a thermosetting resin, an element such as a semiconductor, or a carbon fiber-based material typified by carbon nanotube can be favorably used. The base, however, is by no means limited thereto. The base may be in the form of, for example, a film or a plate. Examples of the thermoplastic resin include polyethylene terephthalate (PET), acrylic resins, cellulose acetate propionate (CAP), cycloolefin polymer (COP), triacetylcellulose (TAC), polyethylene naphthalate (PEN), polyethylene (PE), and polypropylene (PP). In the coating the pressure-sensitive adhesive/adhesive coating solution, the coating thickness of the pressure-sensitive adhesive/adhesive coating solution is not particularly limited, and may be appropriately adjusted so that, for example, the thickness of the dried pressure-sensitive adhesive/adhesive layer becomes a predetermined thickness. The thickness of the dried pressure-sensitive adhesive/adhesive layer is not particularly limited, and is, for example, as described below.

Next, the base coated with the pressure-sensitive adhesive/adhesive coating solution is heated to dry (heat-drying). In the heat-drying, the temperature is not particularly limited, and may be, for example, 50°C or higher, 80°C or higher, 100°C or higher, or 155°C or higher, and may be, for example, 200°C or lower, 180°C or lower, or 160°C or lower. The time of heat-drying may be, for example, 0.5 minutes or longer, 1 minute or longer, or 3 minutes or longer, and for example, 60 minutes or shorter, 30 minutes or shorter, 20 minutes or shorter, or 10 minutes or shorter. In the heat-drying, for example, a crosslinking reaction and a graft polymerization occur between the (meth)acrylic polymer

and the crosslinking agent. Thus, for example, as described above, the amount of the semi-polymer present in the pressure-sensitive adhesive/adhesive coating solution is reduced, and the pressure-sensitive adhesive/adhesive layer is less liable to permeate into the voids of the void-containing layer. In the manner as described above, the pressure-sensitive adhesive/adhesive layer used in the laminate of the present invention can be produced.

Next, the pressure-sensitive adhesive/adhesive layer is attached to the void-containing layer (attaching). Although this method is not particularly limited, for example, as described above, the pressure-sensitive adhesive/adhesive layer may be formed on the void-containing layer of the present invention by attaching, e.g., an adhesive tape including a base and the pressure-sensitive adhesive/adhesive layer of the present invention laminated on the base to the void-containing layer with the pressure-sensitive adhesive/adhesive layer side of the adhesive tape facing the void-containing layer.

The laminate production method of the present invention may further include, for example, heating the pressure-sensitive adhesive/adhesive layer and the void-containing layer after the attaching. Hereinafter, the heating may be referred to as "aging". In the heating (aging), the heating temperature is not particularly limited, and may be, for example, 40°C or higher, 45°C or higher, or 50°C or higher, and may be, for example, 80°C or lower, 70°C or lower, 60°C or lower, or 55°C or lower. The heating time may be, for example, 1 minute or longer, 10 minutes or longer, 60 minutes or longer, or 1800 minutes or longer, and may be, for example, 3000 minutes or shorter, 2800 minutes or shorter, 2500 minutes or shorter, or 2000 minutes or shorter. In the aging, for example, the intermediate layer is formed by uniting the void-containing layer and the pressure-sensitive adhesive/adhesive layer. Then, for example, as described above, the intermediate layer serves as a stopper, which makes it possible to suppress a reduction in the void fraction caused by filling the voids of the void-containing layer with the pressure-sensitive adhesive. The uniting of the void-containing layer and the pressure-sensitive adhesive/adhesive layer may be achieved by embedding the pressure-sensitive adhesive/adhesive layer in the voids of the void-containing layer to cause chemical bond, or simply embedding the pressure-sensitive adhesive/adhesive layer being embedded in the voids of the void-containing layer.

The void-containing layer can be protected from physical damage (particularly abrasion) by the pressure-sensitive adhesive/adhesive layer. It is preferable that the pressure-sensitive adhesive/adhesive layer have excellent pressure resistance so that the void-containing layer does not collapse even when used as a (baseless) void-containing layer-containing pressure-sensitive adhesive/adhesive sheet having no base, however, is not limited thereto. The thickness of the pressure-sensitive adhesive/adhesive layer is not particularly limited, and is, for example, from 0.1 to 100 $\mu\mu$m, from 5 to 50 $\mu\mu$m, from 10 to 30 $\mu\mu$m, or from 12 to 25 $\mu\mu$m.

As described above, the laminate of the present invention obtained in this manner may be further laminated on another film (layer) to form a laminated structure including the void-containing layer (porous structure), for example. In this case, the respective components of the laminated structure may be laminated through the pressure-sensitive adhesive/adhesive layer (pressure-sensitive adhesive or adhesive), for example.

The respective components may be laminated by continuous processing using a long film (e.g., the so-called "roll-to-roll" process) in terms of efficiency, for example. When the base is a molded product, an element, or the like, the components that have been subjected to batch processing may be laminated on the base.

The method for forming the laminate of the present invention on a base (resin film) is described below with reference to the successive treatment process using a laminate 10d of FIG. 3A as an example. It should be noted that the film forming process described below is merely illustrative and do not limit the present invention.

The base may be the resin film described above. In this case, the void-containing layer of the present invention is obtained by forming the void-containing layer on the base. The void-containing layer of the present invention is obtained also by forming the void-containing layer on the base and then laminating the thus formed void-containing layer on the resin film described above in connection with the void-containing layer of the present invention.

In the method for producing the laminate 10d of FIG. 3A, for example, the void-containing layer 11 is formed on the base 14, then the pressure-sensitive adhesive/adhesive layer 12 is formed on the void-containing layer 11, and then the intermediate layer 13 is formed by uniting the void-containing layer 11 and the pressure-sensitive adhesive/adhesive layer 12. More specifically, the method for producing the laminate 10d of FIG. 3A includes, for example, coating (1) of coating a sol particle solution of pulverized products of a gelled compound onto a base (resin film) 14 to form a coating film, drying (2) of drying the sol particle solution to form a dried coating film, chemical treating (for example, crosslinking) (3) of subjecting the coating film to a chemical treatment (for example, crosslinking treatment) to form a void-containing layer 11, attaching (4) of attaching a pressure-sensitive adhesive/adhesive layer 12 to the void-containing layer 20, and forming an intermediate layer (5) of reacting the void-containing layer 11 with the pressure-sensitive adhesive/adhesive layer 12 to form an intermediate layer 13. The method for producing the sol particle solution of pulverized products of a gelled compound is not particularly limited. Specifically, the sol particle solution can be produced by the method described in, for example, WO 2019/065999 or WO 2019/065803. The sol particle solution can be produced also by the method, for example, described in "Reference Example 1" in Examples of the present application described below. Although it is not shown, the laminate production method of the present invention includes, as described above, producing the pressure-sensitive adhesive/adhesive layer by the pressure-sensitive adhesive/adhesive layer production

method of the present invention, and attaching the pressure-sensitive adhesive/adhesive layer to the void-containing layer. As described above, the pressure-sensitive adhesive/adhesive layer production method of the present invention includes coating the pressure-sensitive adhesive/adhesive coating solution onto a base, and heat-drying the base coated with the pressure-sensitive adhesive/adhesive coating solution. The chemical treating (crosslinking) (3) corresponds to the "forming a void-containing layer" of forming a void-containing layer in the laminate of the present invention, and the forming an intermediate layer (5) corresponds to the above-described heating (aging). The forming an intermediate layer (5) (hereinafter sometimes referred to as "aging") may also serve as improving the strength of the void-containing layer 11 (crosslinking-reacting for causing a crosslinking reaction inside the void-containing layer 11). In such a case, after the forming an intermediate layer (5), the void-containing layer 11 is changed to a void-containing layer 11 having improved strength. The present invention, however, is not limited thereto, and for example, the void-containing layer 11 may not be changed after the forming an intermediate layer (5). Further, as described above, the attaching (4) may be attaching of an adhesive tape including a base and the pressure-sensitive adhesive/adhesive layer laminated on the base. In FIG. 1, for example, although the base coated with the pressure-sensitive adhesive/adhesive coating solution (the base on which the pressure-sensitive adhesive/adhesive layer is formed) is not shown, the base may be peeled off from or left on the pressure-sensitive adhesive/adhesive layer 12. Through the above processes (1) to (5), as shown in FIG. 3A, a laminated film (laminate) in which the void-containing layer 11, the intermediate layer 13, and the pressure-sensitive adhesive/adhesive layer 12 are laminated in this order on the resin film 14 can be produced. The forming an intermediate layer (5), however, is not always necessary, and the produced laminate of the present invention may not include the intermediate layer. Furthermore, the laminate production method of the present invention may or may not appropriately include processes other than those described above. As shown in the laminated film (laminate) 10d of FIG. 3A, for example, another base 14 may further be laminated on the pressure-sensitive adhesive/adhesive layer 12. While the pressure-sensitive adhesive/adhesive layer 12 is provided only on one surface of the void-containing layer 11 in the laminated film (laminate) 10d of FIG. 3A, for example, the pressure-sensitive adhesive/adhesive layers 12 may be provided on both surfaces of the void-containing layer 11 as in the laminate 10e of FIG. 3B.

In the coating (1), the method for coating the sol particle solution is not particularly limited, and a commonly used coating method can be employed. Examples of the coating method include a slot die method, a reverse gravure coating method, a micro-gravure method (micro-gravure coating method), a dip method (dip coating method), a spin coating method, a brush coating method, a roller coating method, a flexography, a wire-bar coating method, a spray coating method, an extrusion coating method, a curtain coating method, and a reverse coating method. Among them, from the viewpoint of productivity, smoothness of a coating film, etc., the extrusion coating method, the curtain coating method, the roller coating method, and the micro-gravure coating method are preferable. The coating amount of the sol particle solution is not particularly limited, and can be set as appropriate so that the void-containing layer 11 having a suitable thickness is obtained, for example. The thickness of the void-containing layer 11 is not particularly limited, and is as described above, for example.

In the drying (2), the sol particle solution is dried (i.e., a dispersion medium contained in the sol particle solution is removed) to form the coating film after drying (void-containing layer precursor). The conditions for the drying treatment are not particularly limited, and may be as described above.

In the chemical treating (3), the coating film after the drying that contains a catalyst or a catalyst generator (e.g., a photoactive catalyst, a photocatalyst generator, a thermoactive catalyst, or a thermal catalyst generator) added prior to the coating is irradiated with light or heated, whereby the pulverized products in the coating film after the drying are chemically bonded (e.g., crosslinked) to each other. As a result, the void-containing layer 11 is formed. The conditions for the light irradiation and heating in the chemical treating (3) are not particularly limited, and may be as described above.

On the other hand, although it is not shown, the pressure-sensitive adhesive/adhesive layer of the present invention is separately produced by the producing the pressure-sensitive adhesive/adhesive layer. The producing the pressure-sensitive adhesive/adhesive layer (the pressure-sensitive adhesive/adhesive layer production method of the present invention) is as described above, for example.

Further, the attaching (4) and forming an intermediate layer (5) are performed. As described above, the forming an intermediate layer (5) is heating the pressure-sensitive adhesive/adhesive layer 12 and the void-containing layer 11 after the attaching (4). For example, when the pressure-sensitive adhesive is a pressure-sensitive adhesive composition containing a polymer (e.g., a (meth)acrylic polymer) and a crosslinking agent, the polymer may be crosslinked by the crosslinking agent by the heating. The heating may also serve, for example, as drying the pressure-sensitive adhesive. Further, for example, the heating may also serve as the forming an intermediate layer (5). The temperature in the heating is not particularly limited, and is, for example, 70 to 160°C, 80 to 155°C, or 90 to 150°C. The time of the heating is not particularly limited, and is, for example, 1 to 10 minutes, 1 to 7 minutes, or 2 to 5 minutes.

[Example]

Examples of the present invention will be described below. It is to be noted, however, that the present invention

is by no means limited to the following examples.

In the following reference examples, examples, and comparative examples, the number (relative usage amount) of each substance is the mass part (weight part) unless otherwise stated. In the following reference examples, examples, and comparative examples, the pressure-sensitive adhesive (pressure-sensitive adhesive composition) to be described below was used as the pressure-sensitive adhesive. In the following reference examples, examples, and comparative examples, the "pressure-sensitive adhesive layer" corresponds to the "pressure-sensitive adhesive/adhesive layer". That is, in the following reference examples, examples, and comparative examples, the "pressure-sensitive adhesive layer" and the "pressure-sensitive adhesive/adhesive layer" are synonymous with each other unless otherwise specified.

In the following reference examples, examples, and comparative examples, the storage modulus of the intermediate layer at 23°C, the molecular weight of the (meth)acrylic polymer, the weight average molecular weight (Mw) of the (meth)acrylic polymer, the void fraction, the thickness of each layer, the refractive index, the gel fraction of the pressure-sensitive adhesive/adhesive layer, the weight average molecular weight (Mw) of the sol content of the pressure-sensitive adhesive/adhesive layer, and the nanoindentation hardness were measured by the following measurement methods.

<Measurement method of storage elastic modulus of intermediate layer>

The laminates of examples and comparative examples were subjected to the AFM force curve measurement to measure the elastic modulus distribution, thereby measuring the storage elastic modulus of the intermediate layer in the laminate. Specifically, the laminate obtained by laminating a pressure-sensitive adhesive/ adhesive layer to a void-containing layer of examples or comparative examples was cut into pieces by using a frozen ultramicrotome, and thus prepared piece was fixed on a silicon wafer and subjected to the AFM force curve measurement under the following conditions.

- Analyzer: "MFP-3D-SA" (trade name) manufactured by Oxford Instruments
- Measuring mode: AFM force curve
- Probe: microcantilever "AC240TS" (trade name) manufactured by OLYMPUS CORPORATION, made of Si (equivalent product to spring constant 3N/m).
- Measuring range: 1 μm (128 × 128 points)
- Measuring atmosphere: air
- Temperature: room temperature

<Measurement method of molecular weight of (meth)acrylic polymer>

From the molecular weight distribution curve measured by gel permeation chromatography (GPC), the weight average molecular weight (Mw) of (meth)acrylic polymer, the polydispersity (Mw/Mn), the proportion (weight percentage) of the low molecular weight component having a molecular weight of 100,000 or less, and the proportion (weight percentage) of the high molecular weight component having a molecular weight of 30 million or more were calculated.

- Analyzer: Alliance, manufactured by Waters Corporation
- Column: "G7000HxL+GMHxL+GMHxL" (trade name), manufactured by TOSOH CORPORATION
- Column size: 7.8 mmφ × 30 cm total 90 cm
- Column temperature: 40°C
- Flow rate: 0.8 ml/min
- Injection volume :100 μl
- Eluent: THF (with acid)
- Detector: differential refractometer (RI)
- Standard sample: polystyrene

<Measurement method of refractive index of void-containing layer prior to lamination of pressure-sensitive adhesive>

A base sample with a low refractive index layer was set in an ellipsometer (VASE, manufactured by J. A. Woollam Japan), and the refractive index was measured at a wavelength of 500 nm and at an incidence angle of 50° to 80°. The mean value of the thus-obtained measured values was set as the refractive index.

<Measurement method of refractive index of laminate after lamination of pressure-sensitive adhesive>

Using a prism coupler (manufactured by Metricon), a prism of the device was brought into close contact with

a base side of a laminate obtained by laminating a pressure-sensitive adhesive on a void-containing layer, the total reflection critical angle was measured using a laser, and the refractive index was calculated from the critical angle.

<Measurement method of void fraction>

The void fraction was calculated according to the Lorentz-Lorenz's formula from the refractive index measured as described above.

<Measurement method of thickness>

The thicknesses of the pressure-sensitive adhesive layer at five points were measured using a dial gauge. The mean value of the thus-obtained measured values was set as the thickness of the pressure-sensitive adhesive layer. A thick part with different contrast present between the pressure-sensitive adhesive layer and the low-refractive-index layer in an SEM image was considered as an intermediate layer and the thicknesses of the intermediate layer at two points in the SEM image was read. The mean value of the thus-obtained values was set as the thickness of the intermediate layer.

<Measurement method of refractive index>

The refractive index at the wavelength of 550 nm was measured by the above-described method.

<Measurement method of weight average molecular weight (Mw) of (meth)acrylic polymer>

The weight average molecular weight (Mw) of the (meth)acrylic polymer was measured by gel permeation chromatography (GPC) under the following conditions. The polydispersity (Mw/Mn) of the (meth)acrylic polymer was also measured in the same manner.

- Analyzer: Alliance, manufactured by Waters Corporation
- Column: "G7000HxL+GMHxL+GMHxL" (trade name), manufactured by TOSOH CORPORATION
- Column size: 7.8 mmφ × 30 cm total 90 cm
- Column temperature: 40°C
- Flow rate: 0.8 ml/min
- Injection volume :100 μl
- Eluent: THF (with acid)
- Detector: differential refractometer (RI)
- Standard sample: polystyrene

<Measurement method of gel fraction of pressure-sensitive adhesive/adhesive layer>

A sample 1 was prepared by scraping about 0.1 g from the optical pressure-sensitive adhesive layer formed on the surface of a separator film that has been subjected to peeling processing, within 1 minute from its production. The sample 1 was wrapped in a TEFLON® film ("NTF1122" (trade name), manufactured by Nitto Denko Corporation) having a diameter of 0.2 μm, and then tied with kite thread, thereby obtaining a sample 2. The weight of the sample 2 before being subjected to the following test was measured, and the measured weight was defined as weight A. The weight A is the total weight of the sample 1 (pressure-sensitive adhesive layer), the TEFLON® film, and the kite thread. The total weight of the TEFLON® film and the kite thread was defined as weight B. The sample 2 was then placed in a 50 ml container filled with ethyl acetate and allowed to stand at 23°C for 1 week. The sample 2 was then taken out from the container, dried in a dryer at 130°C for 2 hours to remove ethyl acetate, and then the weight of the sample 2 was measured. The weight of the sample 2 after being subjected to the above test was measured, and the measured weight was defined as weight C. Then, the gel fraction was calculated from the following equation.

$$\text{Gel fraction (\%)} = (C-B) / (A-B) \times 100$$

<Measurement method of weight average molecular weight (Mw) of sol content of pressure-sensitive adhesive/adhesive layer>

The weight average molecular weight (Mw) of the sol content of the pressure-sensitive adhesive layer was

measured by gel permeation chromatography (GPC). The pressure-sensitive adhesive layer was immersed in 10 mM-phosphoric acid/tetrahydrofuran overnight to extract the sol content. At this time, in consideration of the gel fraction of the pressure-sensitive adhesive layer, the sol content of the solution after extraction was adjusted to 0.1 wt %. The extracted solution was filtered with a 0.45-μm membrane filter, and the obtained filtrate was subjected to GPC measurement.

- Analyzer: Alliance, manufactured by Waters Corporation
- Column: "G7000HxL+GMHxL+GMHxL" (trade name), manufactured by TOSOH CORPORATION
- Column size: 7.8 mmφ × 30 cm total 90 cm
- Column temperature: 40°C
- Flow rate: 0.8 ml/min
- Injection volume :100 μl
- Eluent: 10 mM-phosphoric acid/tetrahydrofuran
- Detector: differential refractometer (RI)
- Standard sample: polystyrene

<Measurement method of nano indentation hardness>

The sample for measurement was cut into a piece with about 1 cm per side and fixed to a predetermined support, and the nanoindentation hardness of the pressure-sensitive adhesive layer was measured under the following conditions. The nanoindentation hardness was measured by the nanoindentation method.

- Analyzer: Triboindenter, manufactured by Hysitron Inc.
- Indenter for use: conical (spherical: diameter of 20 μm)
- Measurement method: single push-in measurement
- Temperature: room temperature
- Indentation depth: 2000 nm

From the measured maximal load (Pmax) and contact-projected area (A), the nanoindentation hardness was calculated by the following equation.

$$\text{Nanoindentation hardness} = \text{Pmax}/\text{A}$$

In the present example, the nanoindentation hardness of the surface of the pressure-sensitive adhesive layer was measured, and there was no difference in the measured value even when the cross section of the pressure-sensitive adhesive layer was measured.

In the pressure-sensitive adhesive/adhesive layer in the following reference examples, examples, and comparative examples, it is presumed that, by heat-drying the coated pressure-sensitive adhesive, a polymer (acrylic polymer) was crosslinked by a crosslinking agent and a crosslinked structure was formed, however, the crosslinked structure was not examined.

[Reference Example 1: Production of coating solution for forming void-containing layer]

First, gelation of a silicon compound (the following process (1)) and aging (the following process (2)) were performed to produce a gel having a porous structure (silicone porous material). Thereafter, controlling a gel form (3), replacing a solvent (4), and pulverizing a gel (5) described below were further performed to obtain a coating solution for forming a void-containing layer (gel pulverized product-containing solution). In the present reference example, the controlling a gel form (3) was performed as a different process from the process (1) as described below. The present invention, however, is not limited thereto, and, for example, the controlling a gel form (3) may be performed during the process (1).

(1) Gelation of silicon compound

9.5 kg of a silicon compound precursor MTMS was dissolved in 22 kg of DMSO. To the resultant mixture, 5 kg of 0.01 mol/L oxalic acid aqueous solution was added. The resultant mixture was stirred at room temperature for 120 minutes, whereby MTMS was hydrolyzed to generate tris(hydroxy)methylsilane.

3.8 kg of ammonia water with an ammonia concentration of 28% and 2 kg of pure water were added to 55 kg

of DMSO. Thereafter, the above-described mixture having been subjected to the hydrolysis treatment was further added thereto. The resultant mixture was stirred at room temperature for 60 minutes. Thereafter, the mixture after stirring for 60 minutes was poured into a stainless container with a size of 30 cm in length × 30 cm in width × 5 cm in height and allowed to stand at room temperature to cause gelation of tris(hydroxy)methylsilane. Thus, a gelled silicon compound was obtained.

(2) Aging

The gelled silicon compound obtained by the above gelation treatment was subjected to an aging treatment by incubating it at 40°C for 20 hours. Thus, a cuboid gel mass was obtained. In this gel, since the amount of DMSO (a high boiling point solvent having a boiling point of 130°C or higher) used in the raw material was about 83 wt% of the entire raw material, it was clear that the content of a high boiling point solvent having a boiling point of 130°C or higher was 50 wt% or more. In addition, in this gel, since the amount of MTMS (monomer as a structural unit of the gel) used in the raw material was about 8 wt% of the entire raw material, it was clear that the content of the solvent (in this case, methanol) having a boiling point of less than 130°C generated by hydrolysis of the monomer (MTMS) as a structural unit of gel was 20 wt% or less.

(3) Controlling gel form

Water, which is a replacement solvent, was introduced on the gel synthesized in the stainless container with a size of 30 cm × 30 cm × 5 cm by the processes (1) and (2). Then, a cutting blade of a cutting tool was slowly inserted into the gel in the stainless container from the top to cut the gel into a cuboid with a size of 1.5 cm × 2 cm × 5 cm.

(4) Replacing solvent

Next, replacing a solvent was performed as described in (4-1) to (4-3) below.
(4-1)
After the "controlling a gel form (3)", the gelled silicon compound was immersed in water 8 times the weight of the gelled silicon compound, and stirred slowly for 1 hour so that only water was convected. After 1 hour, the water was replaced with water of the same weight and stirred further for 3 hours. Thereafter, the water was replaced again, and then the water was heated for 3 hours while slowly stirring at 60°C.
(4-2)
After (4-1), the water was replaced with isopropyl alcohol 4 times the weight of the gelled silicon compound, and heated for 6 hours while stirring at 60°C.
(4-3)
After (4-2), the isopropyl alcohol was replaced with isobutyl alcohol of the same weight and heated for 6 hours at 60°C to replace the solvent contained in the gelled silicon compound with isobutyl alcohol. In the manner as described above, the gel for producing void-containing layer of the present invention was produced.

(5) Pulverizing gel

The gel (gelled silicon compound) obtained after the replacing a solvent (4) was subjected to a total of two stages of pulverization including a first pulverization stage by continuous emulsification dispersion (Milder MDN304, manufactured by Pacific Machinery & Engineering Co., Ltd.) and a second pulverization stage by high pressure media-less pulverization (Star Burst HJP-25005, manufactured by Sugino Machine Limited). This pulverization treatment was performed in the following manner. First, 43.4 kg of the gel containing a gelled silicon compound having been subjected to solvent replacement was prepared. 26.2 kg of isobuyl alcohol was added to this gel, and the mixture was then weighed. Thereafter, the mixture was subjected to the first pulverization stage by closed-circuit pulverization for 20 minutes and the second pulverization stage at a pulverization pressure of 100 MPa. Thus, a dispersion liquid (gel pulverized product-containing liquid) of nanometer-sized particles (pulverized products of the gel) in isobutyl alcohol was obtained. Further, 224 g of methyl isobutyl ketone having 1.5 % "WPBG-266" (trade name, manufactured by Wako Pure Chemical Industries, Ltd.) was added to 3 kg of the gel pulverized product-containing liquid, and 67.2 g of methyl isobutyl ketone having 5 % bis(trimethoxylyl)ethane (manufactured by Tokyo Chemical Industry Co., Ltd.) was added thereto, and then 31.8 g of N,N-dimethylformamide was added and mixed, thereby obtaining a coating solution.
As described above, the coating solution for forming a void-containing layer (gel pulverized product-containing solution) of the present reference example (Reference Example 1) was produced. The peak pore diameter of the gel pulverized product (microporous particles) in the coating solution for forming a void-containing layer (gel pulverized product-containing solution) was measured by the above-described method and found to be 12 nm.

[Reference Example 2: Formation of pressure-sensitive adhesive/adhesive layer]

A pressure-sensitive adhesive/adhesive layer of the present reference example (Reference Example 2) was formed by the following procedures (1) to (3).

(1) (Preparation of (meth)acrylic polymer (A1))

A 4-necked flask equipped with a stirring blade, a thermometer, a nitrogen-gas inlet tube, and a condenser was charged with a monomer mixture containing 79.5 parts of butyl acrylate, 15 parts of N-acryloyl morpholine, 5 parts of acrylic acid, and 0.5 parts of 4-hydroxybutyl acrylate. Then, 0.1 parts of 2,2'-azobisisobutyronitrile was charged together with 70 parts of ethyl acetate as a polymerization initiator relative to 100 parts of the monomer mixture, nitrogen gas was introduced while gently stirring the mixture to replace with nitrogen, and then the mixture was subjected to a polymerization reaction for 2 hours while keeping the liquid temperature in the flask at around 55°C, thereby preparing a solution of (meth)acrylic polymer (A1) having a weight average molecular weight (Mw) of 3.4 million and Mw/Mn of 2.5.

(2) (Preparation of pressure-sensitive adhesive composition)

To 100 parts of the solid content of the (meth)acrylic polymer (A1), 0.8 parts of an isocyanate-based crosslinking agent ("Coronate L" (trade name) manufactured by Nippon Polyurethane Industry Co., Ltd., an adduct of trimethylolpropane with trilene diisocyanate) and 0.3 parts of benzoyl peroxide ("NYPER BMT" (trade name) manufactured by NOF CORPORATION) were added, thereby preparing an acrylic pressure-sensitive adhesive solution.

(3) (Formation of pressure-sensitive adhesive/adhesive layer)

Next, the acrylic pressure-sensitive adhesive composition solution was coated onto one surface of a polyethylene terephthalate (PET) film (separator film, MRF38, manufactured by Mitsubishi Chemical Polyester Film Corporation) treated with a silicone peeling agent so as to achieve the thickness of the pressure-sensitive adhesive layer after being dried of 10 μm, and the coated acrylic pressure-sensitive adhesive composition was dried at 155°C for 1 minute, thereby forming a pressure-sensitive adhesive layer on the surface of the separator film.

[Reference 3: Preparation of (meth)acrylic polymers (A2) to (A11)]

(Meth)acrylic polymers (A2) to (A11) were prepared as follows.

(Preparation of (meth)acrylic polymer (A2))

A solution of (meth)acrylic polymer (A2) was prepared in the same manner as in (Preparation of (meth)acrylic polymer (A1)) except that 89.5 parts of butyl acrylate, 5 parts of N-acryloyl morpholine, 5 parts of acrylic acid, and 0.5 parts of 4-hydroxybutyl acrylate were charged.

(Preparation of (meth)acrylic polymer (A3))

A solution of (meth)acrylic polymer (A3) was prepared in the same manner as in (Preparation of (meth)acrylic polymer (A1)) except that 79.5 parts of butyl acrylate, 15 parts of dimethylacrylamide, 5 parts of acrylic acid, and 0.5 parts of 4-hydroxybutyl acrylate were charged.

(Preparation of (meth)acrylic polymer (A4))

A solution of (meth)acrylic polymer (A4) was prepared in the same manner as in (Preparation of (meth)acrylic polymer (A1)) except that 100 parts of ethylacetate was charged relative to 100 parts of the monomer mixture.

(Preparation of (meth)acrylic polymer (A5))

A solution of (meth)acrylic polymer (A5) was prepared in the same manner as in (Preparation of (meth)acrylic polymer (A1)) except that the mixture was subjected to a polymerization reaction for 8 hours.

(Preparation of (meth)acrylic polymer (A6))

A solution of (meth)acrylic polymer (A6) was prepared in the same manner as in (Preparation of (meth)acrylic polymer (A1)) except that 94.5 parts of butyl acrylate, 5 parts of acrylic acid, and 0.5 parts of 4-hydroxybutyl acrylate were charged.

(Preparation of (meth)acrylic polymer (A7))

A solution of (meth)acrylic polymer (A7) was prepared in the same manner as in (Preparation of (meth)acrylic polymer (A1)) except that 84 parts of butyl acrylate, 12 parts of N-acryloyl morpholine, 3 parts of acrylic acid, and 1 part of 4-hydroxybutyl acrylate were charged and the mixture was subjected to a polymerization reaction for 1 hour.

(Preparation of (meth)acrylic polymer (A8))

A solution of (meth)acrylic polymer (A8) was prepared in the same manner as in (Preparation of (meth)acrylic polymer (A7)) except that 70 parts of ethyl acetate and 30 parts of toluene were charged relative to 100 parts of the monomer mixture.

(Preparation of (meth)acrylic polymer (A9))

A solution of (meth)acrylic polymer (A9) was prepared in the same manner as in (Preparation of (meth)acrylic polymer (A7)) except that 84 parts of butyl acrylate, 12 parts of dimethylacrylamide, 3 parts of acrylic acid, and 1 part of 4-hydroxybutyl acrylate were charged.

(Preparation of (meth)acrylic polymer (A10))

A solution of (meth)acrylic polymer (A10) was prepared in the same manner as in (Preparation of (meth)acrylic polymer (A7)) except that 84 parts of butyl acrylate, 12 parts of isobornyl acrylate, 3 parts of acrylic acid, and 1 part of 4-hydroxybutyl acrylate were charged.

(Preparation of (meth)acrylic polymer (A11))

A solution of (meth)acrylic polymer (A11) was prepared in the same manner as in (Preparation of (meth)acrylic polymer (A7)) except that the mixture was subjected to a polymerization reaction for 6 hours.

[Example 1]

(Production of laminate)

The coating solution for forming a void-containing layer prepared in Reference Example 1 was coated onto an acrylic base and the coated acrylic base was dried to form a void-containing layer having a thickness of about 850 nm (void fraction: 59 vol%). Next, the laminate was irradiated with UV (300 mJ) from the void-containing layer side. Thereafter, the pressure-sensitive adhesive layer having a thickness of 10 μm obtained in Reference Example 2 was attached to the void-containing layer surface, and the resultant was subjected to the aging for 20 hours at 60°C to produce a laminate of the present example.

[Examples 2 to 11 and Comparative Examples 1 to 6]

The laminates of Examples 2 to 11 and Comparative Examples 1 to 6 were produced as follows.

In Examples 2 to 11 and Comparative Examples 1 to 6, as summarized in Tables 1 to 3 below, either the same (meth)acrylic polymer (A1) as in Example 1 was used (Example 5) or any of the (meth)acrylic polymers (A2) to (A11) described in Reference Example 3 was used instead of the (meth)acrylic polymer (A1) (Examples 2 to 4, 6 to 11 and Comparative Examples 1 to 6). The method and conditions for producing the (meth)acrylic polymers (A2) to (A11) are as described in Reference Example 3. In the method for producing the (meth)acrylic polymers (A2) to (A11), the type and the proportion of the monomer are as described in Reference Example 3, and are as summarized in Tables 1 to 3 below. The polymer properties (weight average molecular weight (MW) and polydispersity (Mw/Mn)) of the (meth)acrylic polymers (A2) to (A7) are as summarized in Tables 1 and 3 below. The polymer properties (the proportions of (meth)acrylic polymer having a polystyrene-equivalent molecular weight of 100,000 or less and 30 million or more, weight average

molecular weight (MW)) of the (meth)acrylic polymers (A7) to (A11) are as summarized in Table 2 below.

Further, in Examples 2 to 11 and Comparative Examples 1 to 6, the amount of the crosslinking agent used was as summarized in Tables 1 to 3 below. The acrylic pressure-sensitive adhesive composition solutions used in the production of the laminates of Examples 2 to 11 and Comparative Examples 1 to 6 were prepared in the same manner as in Example 1, except that one or both of the type of the (meth)acrylic polymer and the amount of the crosslinking agent used were appropriately changed. Further, pressure-sensitive adhesive/adhesive layers were produced in the same manner as in Example 1 using the acrylic pressure-sensitive adhesive composition solutions, thereby producing the laminates of Examples 2 to 11 and Comparative Examples 1 to 6.

[Heat durability test]

Further, the laminates of the examples and the comparative examples prepared as described above were placed in an oven at 95°C and subjected to a heat durability test for 1000 hours. The degree of filling of the voids of the void-containing layer before and after the heat durability test was examined by the Lorentz-Lorenz's formula, and the void retention rate of the void-containing layer was calculated. The peeling of the intermediate layer and a substance attached thereto was visually evaluated after the heat durability test. The results are summarized in Tables 1 to 3.

[Measurement of nanoindentation hardness]

The nanoindentation hardness of each of the laminates of the examples and the comparative examples produced as described above was measured by the nanoindentation method. The results are summarized in Tables 1 to 3.

Meanings of abbreviations and the like in Tables 1 to 3 below are as follows.

BA: butyl acrylate
ACMO: N-acryloylmorpholine
DMAA: dimethylacrylamide
IBXA: isobornyl acrylate
AA: acrylic acid
HBA:4-hydroxybutyl acrylate
Isocyanate: adduct of trimethylolpropane with trilene diisocyanate ("Colonate L" (trade name) manufactured by TOSOH CORPORATION)
Peroxide: benzoyl peroxide ("NYPER BMT" (trade name) manufactured by NOF CORPORATION)
Epoxy: 1,3-bis(N,N-diglycidylaminomethyl)cyclohexane ("TETRAD-C" manufactured by Mitsubishi Gas Chemical Company, Inc.)

[Table 1]

| | (meth)acrylic polymer | Polymer composition | | | | | Polymer properties | | Crosslinking agent | | Gel fraction | Void retention rate after 95°C for 1000 h | Nanoindentation hardness (MPa) | Peeling durability after 95°C for 1000 h |
|---|---|---|---|---|---|---|---|---|---|---|---|---|---|---|
| | | BA | ACMO | DMAA | AA | 4HBA | Mw | Mw/Mn | Isocyanate | Peroxide | | | | |
| Ex. 1 | (A1) | 79.5 | 15 | | 5 | 0.5 | 3.4 million | 2.5 | 0.8 | 0.3 | 98% | 90% | 0.21 | ○ Not peeled |
| Ex. 2 | (A2) | 89.5 | 5 | | 5 | 0.5 | 3.2 million | 2.4 | 0.8 | 0.3 | 95% | 83% | 0.13 | ○ Not peeled |
| Ex. 3 | (A3) | 79.5 | | 15 | 5 | 0.5 | 3.0 million | 2.3 | 0.8 | 0.3 | 96% | 88% | 0.17 | ○ Not peeled |
| Ex. 4 | (A4) | 79.5 | 15 | | 5 | 0.5 | 1.8 million | 2.2 | 0.8 | 0.3 | 93% | 80% | 0.12 | ○ Not peeled |
| Ex. 5 | (A1) | 79.5 | 15 | | 5 | 0.5 | 3.4 million | 2.5 | 0.8 | 0.1 | 88% | 75% | 0.11 | ○ Not peeled |
| Com. Ex. 1 | (A5) | 79.5 | 15 | | 5 | 0.5 | 2.5 million | 4.2 | 0.8 | 0.3 | 92% | 45% | 0.09 | ○ Not peeled |
| Com. Ex. 2 | (A6) | 94.5 | | | 5 | 0.5 | 2.8 million | 2.7 | 0.8 | 0.1 | 85% | 50% | 0.08 | ○ Not peeled |

[Table 2]

| | (meth)acrylic polymer | Polymer composition | | | | | | Polymer properties | | | Crosslinking agent | | Gel fraction | Void retention rate after 95°C for 1000 h | Nanoindentation hardness (MPa) | Peeling durability after 95°C for 1000 h |
|---|---|---|---|---|---|---|---|---|---|---|---|---|---|---|---|---|
| | | BA | ACMO | DMAA | IBXA | AA | 4HBA | Molecular weight of 100,000 or less | Molecular weight of 30 million or more | Mw | Isocyanate | Peroxide | | | | |
| Ex. 6 | (A7) | 84 | 12 | | | 3 | 1 | < 0.1 | < 0.1 | 2.9 million | 0.6 | 0.3 | 95% | 92% | 0.20 | ○ Not peeled |
| Ex. 7 | (A8) | 84 | 12 | | | 3 | 1 | < 0.1 | <0.1 | 0.9 million | 0.6 | 0.3 | 98% | 81% | 0.13 | ○ Not peeled |
| Ex. 8 | (A9) | 84 | | 12 | | 3 | 1 | < 0.1 | < 0.1 | 3.0 million | 0.6 | 0.3 | 94% | 90% | 0.18 | ○ Not peeled |
| Ex. 9 | (A10) | 84 | | | 12 | 3 | 1 | < 0.1 | < 0.1 | 3.1 million | 0.6 | 0.3 | 96% | 70% | 0.12 | ○ Not peeled |
| Com. Ex. 3 | (A11) | 84 | 12 | | | 3 | 1 | 4 | < 0.1 | 2.6 million | 0.6 | 0.3 | 94% | 47% | 0.09 | ○ Not peeled |
| Com. Ex. 4 | (A7) | 84 | 12 | | | 3 | 1 | < 0.1 | <0.1 | 2.9 million | 0.2 | 0.1 | 62% | 38% | 0.07 | ○ Not peeled |

[Table 3]

| | (meth)acrylic polymer | Polymer composition | | | | Polymer properties | | Crosslinking agent | | | Gel fraction | Void retention rate after 95°C for 1000 h | Nanoindentation hardness (MPa) | Peeling durability after 95°C for 1000 h |
|---|---|---|---|---|---|---|---|---|---|---|---|---|---|---|
| | | BA | ACMO | AA | 4HBA | Mw | Mw/Mn | Peroxide | Isocyanate | Epoxy | | | | |
| Ex. 10 | (A7) | 84 | 12 | 3 | 1 | 2.9 million | 2.2 | | 4.0 | 0.5 | 97% | 92% | 0.52 | ○ Not peeled |
| Ex. 11 | (A4) | 79.5 | 15 | 5 | 0.5 | 1.8 million | 2.2 | | 0.5 | 0.1 | 93% | 82% | 0.15 | ○ Not peeled |
| Com. Ex. 5 | (A5) | 79.5 | 15 | 5 | 0.5 | 2.5 million | 4.2 | 0.3 | 0.3 | | 92% | 47% | 0.09 | ○ Not peeled |
| Com. Ex. 6 | (A7) | 84 | 12 | 3 | 1 | 2.9 million | 2.2 | | 8.0 | 0.1 | 99% | 93% | 1.10 | × Peeled |

As summarized in Tables 1 to 3, in Examples 1 to 11 in which the nanoindentation hardness of the pressure-sensitive adhesive layer of the laminate was 0.1 MPa or more and 1.0 MPa or less, the void retention rate of the void-containing layer exceeded 50 vol% after the heat durability test of maintaining a temperature at 95 °C and a relative humidity at 95% for 1000 hours, and the intermediate layer and a substance attached thereto did not peel off even after the heat durability test. That is, the laminates of Examples 1 to 11 were able to firmly maintain the adhesion between the void-containing layer and the pressure-sensitive adhesive layer while achieving less liable permeation of a pressure-sensitive adhesive or an adhesive into voids. In contrast, in Comparative Examples 1 to 6 in which the nanoindentation hardness of the pressure-sensitive adhesive/adhesive layer of the laminate was less than 0.1 MPa or more than 1.0 MPa, the void retention rate of the void-containing layer was 50 vol% or less, and less liable permeation of a pressure-sensitive adhesive or an adhesive into voids was not achieved (Comparative Examples 1 to 5), or the adhesion between the void-containing layer and the pressure-sensitive adhesive/adhesive layer was poor due to peeling between the intermediate layer and a substance attached thereto (Comparative Example 6).

Industrial Applicability

As described above, the present invention can provide a laminate of a void-containing layer and a pressure-sensitive adhesive/adhesive layer, in which a pressure-sensitive adhesive force or an adhesive force is achieved as well as a pressure-sensitive adhesive or an adhesive is less liable to permeate into voids, and an optical member and an optical apparatus including the laminate. The application of the present invention is not particularly limited. For example, the optical apparatus of the present invention is not particularly limited, and may be an image display device, an illumination device, or the like. Examples of the image display device include a liquid crystal display, an organic EL display, and a micro LED display. The illumination device may be, for example, an organic EL illumination, or the like. According to the laminate of the present invention, for example, the pressure-sensitive adhesive or the adhesive is less liable to permeate into voids of the void-containing layer even under high temperature and high humidity, and thus is particularly suitable for use under extreme conditions such as in a vehicle. Further, the application of the laminate of the present invention is not limited to the optical member and the optical apparatus of the present invention, and can be used in a wide range of applications.

This application claims priority from Japanese Patent Application Nos. 2021-162189 and 2021-162190 filed on September 30, 2021 and Japanese Patent Application No. 2022-052542 filed on March 28, 2022. The entire subject

matters of these Japanese Patent Applications are incorporated herein by reference.

Reference Signs List

| | |
|---|---|
| 10, 10a, 10b, 10c, 10d, 10e: | laminate |
| 11: | void-containing layer |
| 12: | pressure-sensitive adhesive/adhesive layer |
| 13: | intermediate layer |
| 14: | base |

## Claims

**1.** A laminate comprising:

a void-containing layer; and
a pressure-sensitive adhesive/adhesive layer, wherein

the pressure-sensitive adhesive/adhesive layer is directly laminated on one surface or both surfaces of the void-containing layer,
the pressure-sensitive adhesive/adhesive layer contains a (meth)acrylic polymer, and nanoindentation hardness measured by pushing an indenter of a nano indenter into the pressure-sensitive adhesive/adhesive layer for 2000 nm is 0.1 MPa or more and 1.0 MPa or less.

**2.** The laminate according to claim 1, wherein
the (meth)acrylic polymer contains 1 to 30 wt% of a nitrogen-containing monomer as a monomer unit and has a polydispersity (weight average molecular weight (Mw)/number average molecular weight (Mn)) of 3.0 or less.

**3.** The laminate according to claim 1 or 2, wherein

the pressure-sensitive adhesive/adhesive layer is formed of a pressure-sensitive adhesive/adhesive containing the (meth)acrylic polymer and a crosslinking agent, and
the pressure-sensitive adhesive/adhesive has a gel fraction of more than 85%.

**4.** The laminate according to any one of claims 1 to 3, wherein

the pressure-sensitive adhesive/adhesive layer is formed of a pressure-sensitive adhesive/adhesive containing the (meth)acrylic polymer,
the pressure-sensitive adhesive/adhesive has a gel fraction of more than 85%, and
the (meth)acrylic polymer is substantially free of a (meth)acrylic polymer having a polystyrene-equivalent molecular weight of 100,000 or less.

**5.** The laminate according to any one of claims 1 to 4, wherein
a content of the (meth)acrylic polymer having a polystyrene-equivalent molecular weight of 100,000 or less in the (meth)acrylic polymer is 10 wt% or less.

**6.** The laminate according to any one of claims 1 to 5, wherein
the (meth)acrylic polymer is substantially free of a (meth)acrylic polymer having a polystyrene-equivalent molecular weight of 30 million or more.

**7.** The laminate according to any one of claims 1 to 6, wherein
a content of the (meth)acrylic polymer having a polystyrene-equivalent molecular weight of 30 million or more in the (meth)acrylic polymer is 10 wt% or less.

**8.** The laminate according to any one of claims 1 to 7, wherein
the (meth)acrylic polymer contains 1 to 30 wt% of a nitrogen-containing monomer as a monomer unit.

**9.** The laminate according to any one of claims 2, 3, and 8, wherein the nitrogen-containing monomer is a heterocycle-containing acrylic monomer.

**10.** The laminate according to any one of claims 1 to 9, wherein the weight average molecular weight (Mw) of the (meth)acrylic polymer is 1.5 million to 4 million.

**11.** The laminate according to any one of claims 1 to 10, comprising:

an intermediate layer interposed between the void-containing layer and the pressure-sensitive adhesive/adhesive layer, wherein
the intermediate layer is a layer formed by uniting the void-containing layer and the pressure-sensitive adhesive/adhesive layer.

**12.** The laminate according to claim 11, wherein the intermediate layer has a thickness of 10 nm to 100 nm.

**13.** The laminate according to any one of claims 1 to 12, wherein the intermediate layer has a storage elastic modulus of 1.0 MPa or more at 23 °C.

**14.** The laminate according to any one of claims 1 to 13, wherein a void retention rate of the void-containing layer exceeds 50 vol% after a heat durability test of maintaining a temperature at 95°C for 1000 hours.

**15.** An optical member comprising:

the laminate according to any one of claims 1 to 14.

**16.** An optical apparatus comprising: the optical member according to claim 15.

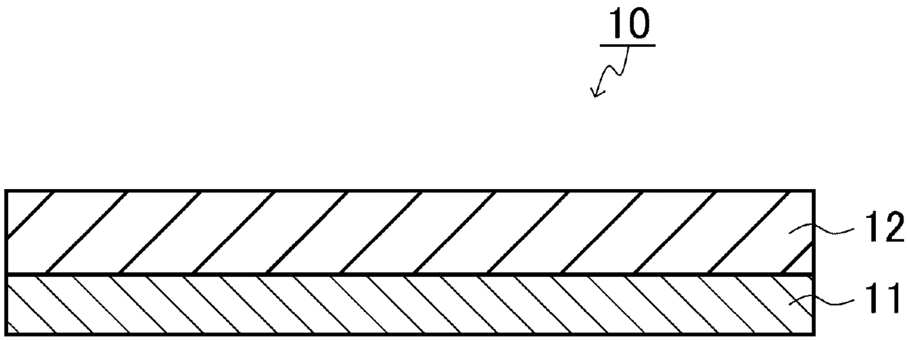


FIG. 1A

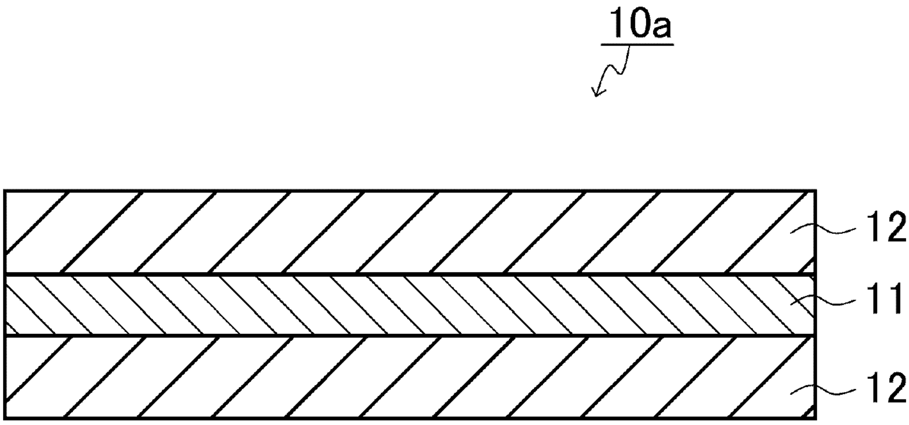


FIG. 1B

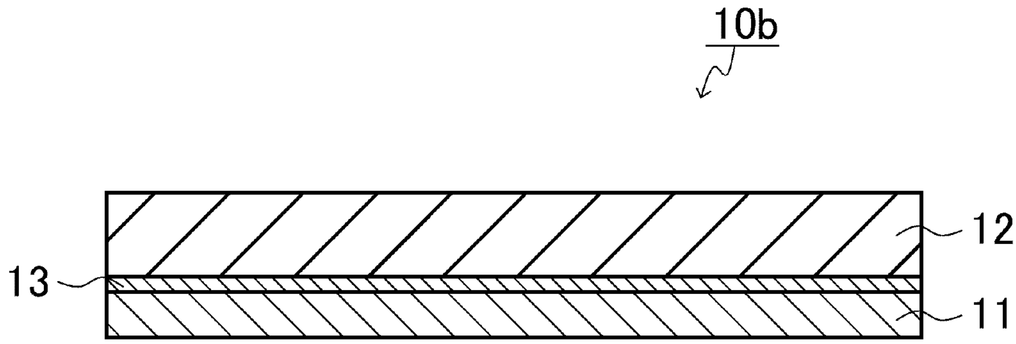


FIG. 2A

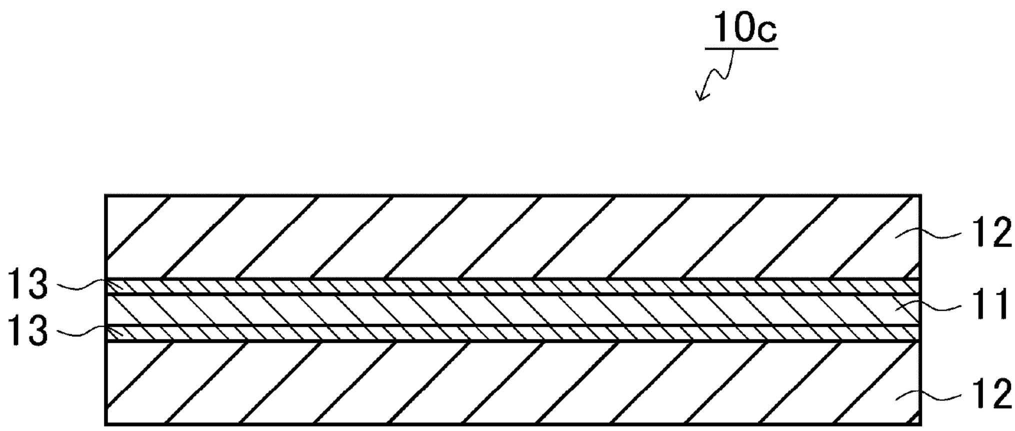


FIG. 2B

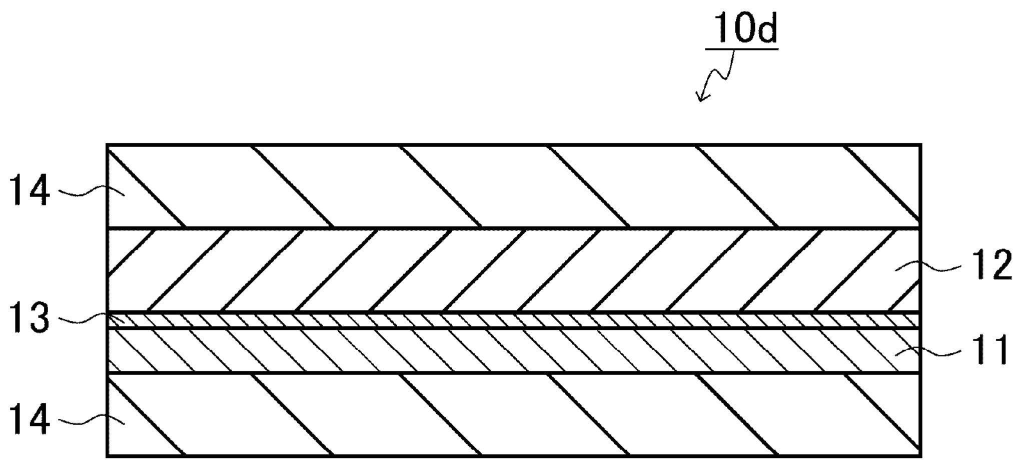


FIG. 3A

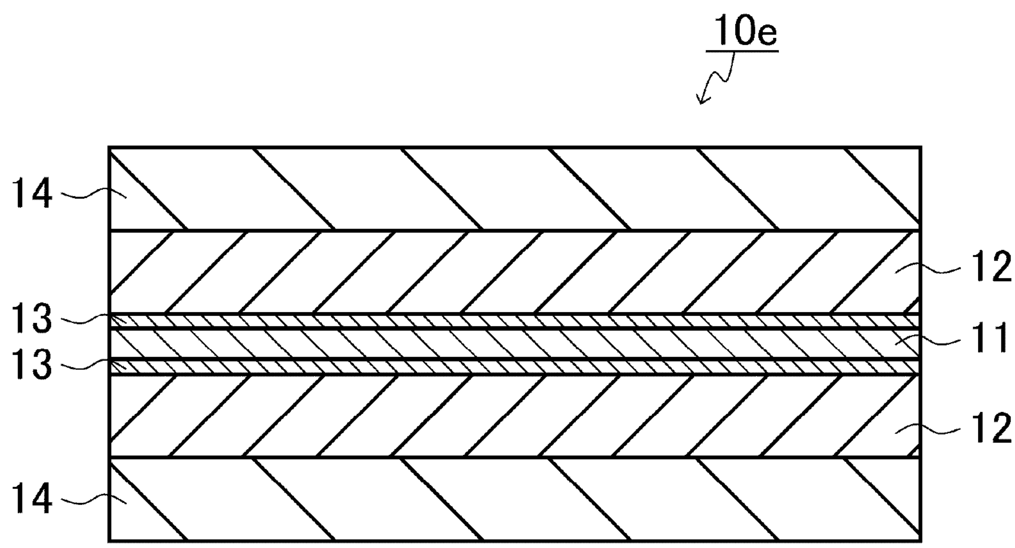


FIG. 3B

**INTERNATIONAL SEARCH REPORT**

International application No.
**PCT/JP2022/034005**

**A. CLASSIFICATION OF SUBJECT MATTER**

***B32B 27/00***(2006.01)i; ***B32B 27/30***(2006.01)i; ***C09J 133/00***(2006.01)i; ***C09J 133/04***(2006.01)i; ***C09J 7/26***(2018.01)i; ***C09J 7/38***(2018.01)i; ***B32B 3/24***(2006.01)i; ***G02B 1/10***(2015.01)i; ***G02B 1/111***(2015.01)i
FI: C09J7/38; B32B27/30 A; G02B1/111; C09J7/26; C09J133/04; B32B27/00 M; B32B3/24 Z; C09J133/00; G02B1/10; B32B3/24

According to International Patent Classification (IPC) or to both national classification and IPC

**B. FIELDS SEARCHED**

Minimum documentation searched (classification system followed by classification symbols)

B32B27/00; B32B27/30; C09J133/00; C09J133/04; C09J7/26; C09J7/38; B32B3/24; G02B1/10; G02B1/111

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | WO 2021/111995 A1 (OTSUKA CHEMICAL CO., LTD.) 10 June 2021 (2021-06-10) entire text, all drawings | 1-16 |
| A | WO 2019/044623 A1 (SEKISUI CHEMICAL CO., LTD.) 07 March 2019 (2019-03-07) entire text, all drawings | 1-16 |
| A | WO 2018/062289 A1 (NITTO DENKO CORPORATION) 05 April 2018 (2018-04-05) entire text, all drawings | 1-16 |

☐ Further documents are listed in the continuation of Box C.    ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **14 November 2022** | **22 November 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2022/034005**

| Patent document cited in search report | Publication date (day/month/year) | Patent family member(s) | Publication date (day/month/year) |
|---|---|---|---|
| WO 2021/111995 A1 | 10 June 2021 | KR 10-2022-0110736 A | |
| | | TW 202130772 A | |
| WO 2019/044623 A1 | 07 March 2019 | CN 110719944 A | |
| | | KR 10-2020-0044722 A | |
| WO 2018/062289 A1 | 05 April 2018 | US 2020/0032113 A1<br>entire text, all drawings | |
| | | CN 109790423 A | |
| | | KR 10-2019-0057101 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2012156082 A
- JP H101998062626 A
- JP 2014046518 A
- WO 2019065999 A
- WO 2019065803 A
- JP 2021162189 A
- JP 2021162190 A
- JP 2022052542 A